# EUROPÄISCHE PATENTSCHRIFT

(11) **EP 4 187 511 B1**
(45) Veröffentlichungstag und Bekanntmachung des Hinweises auf die Patenterteilung: **22.10.2025**
(21) Anmeldenummer: 22206322.4
(22) Anmeldetag: 09.11.2022
(51) Int. Cl.: G07C 9/20, G06K 7/14, G06K 7/10, G07B 15/00, G07C 9/10

(54) **FEST MONTIERTE TICKETERFASSUNGSVORRICHTUNG FÜR EIN ZUGANGSKONTROLLSYSTEM**
FIXEDLY MOUNTED TICKET CAPTURE DEVICE FOR AN ACCESS CONTROL SYSTEM
DISPOSITIF DE CAPTURE DE TICKET FIXÉ POUR UN SYSTÈME DE CONTRÔLE D'ACCÈS

(30) Priorität: 25.11.2021 DE 102021130970
(43) Veröffentlichungstag der Anmeldung: 31.05.2023
(73) Patentinhaber: Scheidt & Bachmann GmbH, 41238 Mönchengladbach (DE)
(72) Erfinder: Müller, Thomas, 41189 Mönchengladbach (DE)
(74) Vertreter: Cohausz & Florack

(56) Entgegenhaltungen:
- EP-A1- 3 382 657
- CN-A- 110 648 433
- CN-U- 210 895 468
- CN-U- 210 955 249
- CN-U- 210 955 250
- CN-U- 212 873 754

## Beschreibung

Die Anmeldung betrifft eine fest montierte Ticketerfassungsvorrichtung für ein Zugangskontrollsystem (bzw. eines Zufahrtkontrollsystems), umfassend mindestens eine kamerabasierte Erfassungseinrichtung, eingerichtet zum Erfassen von Bildern eines graphischen Ticketcodes eines Ticketmediums in einem Erfassungsbereich der kamerabasierten Erfassungseinrichtung sowie zum Erstellen von erfassten Bilddaten aus den erfassten Bildern, und mindestens eine mit der kamerabasierten Erfassungseinrichtung kommunikativ gekoppelte Auswerteeinrichtung, eingerichtet zumindest zum Erhalten der erfassten Bilddaten von der kamerabasierten Erfassungseinrichtung und zum Extrahieren eines Dateninhalts des graphischen Ticketcodes aus den erhaltenen erfassten Bilddaten. Darüber hinaus betrifft die Anmeldung ein Verfahren und ein Zugangskontrollsystem.

Zugangskontrollsysteme (bei Fahrzeugen auch Zufahrtskontrollsysteme genannt) zum Kontrollieren eines Zugangs bzw. einer Zufahrt von einem ersten Bereich in einen zweiten Bereich sind aus dem Stand der Technik bekannt. Beispielsweise kann ein Einlassen (also insbesondere ein Einfahren oder Eintreten) von einem unkontrollierten Bereich zu einem kontrollierten Bereich an einem Einlass (also insbesondere ein Eingang oder eine Einfahrt) und/oder ein Auslassen (also insbesondere ein Ausfahren oder Austreten) von einem kontrollierten Bereich zu einem unkontrollierten Bereich an einem Auslass (also insbesondere ein Ausgang oder eine Ausfahrt) mit Hilfe eines anmeldungsgemäßen Zugangskontrollsystems gesteuert werden.

Ein Zugangskontrollsystem kann über mindestens ein Gate verfügen. Ein Gate ist insbesondere eine Durchgangssperre oder eine Durchfahrtssperre. Ein Gate ist eingerichtet zum selektiven Versperren und zum selektiven Ermöglichen eines Einlasses (also insbesondere eines Einfahrens oder Eintretens) von einem ersten Bereich zu einem zweiten Bereich. Durch ein Gate kann insbesondere sichergestellt werden, dass nur autorisierte Nutzer das Gate passieren können, um beispielsweise in den kontrollierten Bereich zu gelangen und/oder den kontrollierten Bereich zu verlassen.

Zugangskontrollsysteme werden beispielsweise bei Personentransportsystemen oder Parksystemen mit einem Parkbereich für Fahrzeuge eingesetzt, aber auch bei anderen Anwendungen, bei denen eine Berechtigung von Nutzern kontrolliert werden soll, wie zum Beispiel bei Sport-, Kultur- oder Freizeitveranstaltungen. In diesem Fall können Zugangskontrollsysteme auch dazu eingerichtet sein, die Berechtigung eines Nutzers zum Aufenthalt in einem kontrollierten Bereich zu überprüfen und das Ergebnis der Überprüfung anzuzeigen. Insbesondere kann sich der Nutzer bereits im kontrollierten Bereich aufhalten, während die Kontrolle anmeldungsgemäß durchgeführt wird, wie beispielweise mit einem anmeldungsgemäß ausgestatteten mobilen Entwerter (Validator) in einem Bus oder in einer Bahn oder mit einem anmeldungsgemäß ausgestatteten stationären Entwerter (Validator) auf einem Bahnsteig oder an einem Veranstaltungsort.

Bekannte Gates sind dazu konfiguriert, eine Zugangsberechtigung eines Nutzers vor einer Freigabe eines Passierens des Gates zu prüfen. Beispielsweise sind Zugangskontrollsysteme bekannt, bei denen ein Ticketmedium eines Nutzers vor einer Freigabe geprüft wird. Ein Nutzer kann über ein Ticketmedium mit einem von einer Schnittstelleneinrichtung des Gates auslesbaren Ticketcode verfügen (z.B. Magnetstreifencode, grafischer Ticketcode, wie ein Barcode oder QR-Code, RFID-Kennung, eine andere auslesbare Nutzer- oder Mobilgerätkennung etc.). Der Ticketcode kann als Dateninhalt zumindest die Zugangsberechtigung des Nutzers enthalten oder eine Identifikation des Nutzers, anhand derer die Zugangsberechtigung geprüft werden kann.

Im Ausgangszustand ist ein Gate in der Regel gesperrt. Das bedeutet, dass ein Sperrelement des Gates einen Nutzer am Durchgehen bzw. Durchfahren durch das Gate physisch hindert. In anderen Fällen kann das Gate im Ausgangszustand geöffnet sein und sich nur dann schließen, wenn ein Nutzer ohne eine gültige Zugangsberechtigung bzw. einen gültigen Ticketcode versucht, das Gate zu passieren. Ferner sind Gates bekannt, die ohne Sperrelemente auskommen und die das Durchgehen oder Durchfahren ausschließlich optisch signalisieren, beispielsweise schrankenlose Zufahrten oder Ausfahrten für Parkhäuser. Ohne Beschränkung der Allgemeinheit wird nachfolgend davon ausgegangen, dass ein Gate im Ausgangszustand gesperrt ist und bei einer positiven Prüfung des Ticketcodes eines Nutzers für das Durchgehen bzw. Durchfahren des Nutzers geöffnet werden soll.

Ein Zugangskontrollsystem, insbesondere ein Gate des Zugangskontrollsystems, kann über mindestens eine fest montierte Ticketerfassungsvorrichtung verfügen. Bekannte fest montierte Ticketerfassungsvorrichtungen umfassen mindestens eine kamerabasierte Erfassungseinrichtung, eingerichtet zum Erfassen von Bildern eines graphischen Ticketcodes (z.B. Barcode oder QR-Code) eines Ticketmediums in einem Erfassungsbereich der kamerabasierten Erfassungseinrichtung sowie zum Erstellen von erfassten Bilddaten aus den erfassten Bildern. Mit anderen Worten, ist es erforderlich, dass ein Nutzer den graphischen Ticketcode des Ticketmediums derart in den Erfassungsbereich der kamerabasierten Erfassungseinrichtung hält, dass dieser in Form von Bilddaten durch die Erfassungseinrichtung erfasst bzw. aufgenommen werden kann.

Mit der kamerabasierten Erfassungseinrichtung ist in der Regel eine Auswerteeinrichtung kommunikativ gekoppelt. Die erfassten Bilddaten werden der Auswerteeinrichtung zur Verfügung gestellt. Die Auswerteeinrichtung ist eingerichtet zumindest zum Extrahieren des Dateninhalts des graphischen Ticketcodes aus den erfassten Bilddaten, um insbesondere eine Prüfung einer Zugangsberechtigung zu ermöglichen.

Beispielsweise kann eine (lokale) Auswerteeinrichtung der Ticketerfassungsvorrichtung des Gates und/oder ein kommunikativ mit dem Gate gekoppeltes Backendsystem, umfassend eine Ausgabeeinrichtung, den extrahierten Dateninhalt des graphischen Ticketcodes prüfen und ein Einlassen eines Nutzers von einem ersten zu einem zweiten Bereich, also einen Durchgang oder eine Durchfahrt durch ein Gate, bei einem positiven Ergebnis freigeben. Fällt das Ergebnis negativ aus und der Nutzer ist nicht berechtigt, bleibt das Gate gesperrt.

Um insbesondere die Nutzerfreundlichkeit von Zugangskontrollsystemen zu verbessern, ist es aus dem Stand der Technik bekannt, mobile Endgeräte, wie Smartphones, als Ticketmedien zu verwenden. Hierbei kann insbesondere auf einem mobilen Endgerät eines Nutzers eine Zugangsanwendung in Form einer App installiert sein. Die Zugangsanwendung kann insbesondere eingerichtet sein zum Bewirken eines Anzeigens, durch ein Display des mobilen Endgeräts, eines graphischen Ticketcodes. Jedoch ist es weiterhin bekannt, andere Ticketmedien zu verwenden, wie beispielsweise papierbasierte Medien mit einem (aufgedruckten) graphischen Ticketcode.

Insbesondere bei der Verwendung von mobilen Endgeräten als Ticketmedium mit einem graphischen Ticketcode, aber auch bei anderen Ticketmedien mit graphischen Ticketcodes, kommt es bei der Erfassung des graphischen Ticketcodes an der Ticketerfassungsvorrichtung regelmäßig zu Problemen, insbesondere zu Verzögerungen beim Einlesevorgang. Es ist erkannt worden, dass diese Verzögerungen in der Regel auf einen Präsentationsfehler des Nutzers während der Präsentation des graphischen Ticketcodes an der kamerabasierten Erfassungseinrichtung basieren. Hierbei meint ein Präsentationsfehler insbesondere, dass die Erfassungseinrichtung keine Bilddaten erfassen bzw. aufnehmen kann, die eine erfolgreiche Extraktion des Dateninhalts eines graphischen Ticketcodes des Ticketmediums aus den erfassten Bilddaten erlauben.

Mit anderen Worten, kann der Dateninhalt eines graphischen Ticketcodes aufgrund des Präsentationsfehlers nicht erfolgreich durch die Ticketerfassungsvorrichtung ausgelesen werden. Erschwerend kommt regelmäßig hinzu, dass die Art des Präsentationsfehlers aufgrund der Ausrichtung des graphischen Ticketcodes (bzw. des Displays, auf dem der Ticketcode dargestellt wird oder werden soll) zu der kamerabasierten Erfassungseinrichtung für den Nutzer nicht ersichtlich ist. D.h. der Nutzer weiß nicht, weshalb ein Einlesen fehlschlägt. Dies verhindert wiederum, dass ein Nutzer zielgerichtete Maßnahmen zur Beseitigung des Präsentationsfehlers ergreifen kann. Hieraus resultiert, dass es dem Nutzer nicht möglich ist, den Präsentationsfehler zeitnah zu beheben.

Wie beschrieben wurde, erkennt der Nutzer demnach insbesondere nicht den Grund für den erfolglosen Lesevorgang und kann somit keine zielgerichteten Maßnahmen ergreifen. Der gesamte Vorgang dauert lange, ist für den Nutzer nicht nachvollziehbar und daher frustrierend. Es kommt insbesondere zu einer Reduzierung des Durchsatzes an einem Gate oder einem Gatearray, umfassend eine Mehrzahl an (benachbart angeordneter) Gates.

Bei einem Personentransportsystem kann insbesondere die Fahrplantreue aufgrund des langsameren Einstiegprozesses der Fahrgäste beeinträchtigt werden. Bei einem Parksystem kann es zu einem Rückstau kommen. Relevanter Stand der Technik kann der CN210955250U, CN210895468U, CN210955249U, CN212873754U, CN110648433A und EP3382657A1 entnommen werden.

Der Anmeldung liegt daher die Aufgabe zugrunde, eine fest montierte Ticketerfassungsvorrichtung für ein Zugangskontrollsystem bereitzustellen, bei der die Nachteile des Stands der Technik reduziert werden und insbesondere der Durchsatz an einem Einlass und/oder Auslass des Zugangskontrollsystems verbessert wird.

Die Aufgabe wird gemäß einem ersten Aspekt gelöst durch eine fest montierte Ticketerfassungsvorrichtung nach Anspruch 1 für ein Zugangskontrollsystem. Die fest montierte Ticketerfassungsvorrichtung umfasst mindestens eine kamerabasierte Erfassungseinrichtung. Die kamerabasierte Erfassungseinrichtung ist eingerichtet zum Erfassen von Bildern eines graphischen Ticketcodes eines Ticketmediums in einem Erfassungsbereich der kamerabasierten Erfassungseinrichtung. Die kamerabasierte Erfassungseinrichtung ist eingerichtet zum Erstellen von erfassten Bilddaten aus den erfassten Bildern. Die Ticketerfassungsvorrichtung umfasst mindestens eine mit der kamerabasierten Erfassungseinrichtung kommunikativ gekoppelte Auswerteeinrichtung. Die Auswerteeinrichtung ist eingerichtet zumindest zum Erhalten der erfassten Bilddaten von der kamerabasierten Erfassungseinrichtung. Die Auswerteeinrichtung ist eingerichtet zumindest zum Extrahieren eines Dateninhalts des graphischen Ticketcodes aus den erhaltenen erfassten Bilddaten. Die Ticketerfassungsvorrichtung umfasst mindestens eine mit der kamerabasierten Erfassungseinrichtung kommunikativ gekoppelte optische Anzeigeeinrichtung. Die Anzeigeeinrichtung ist eingerichtet zum Erhalten der erfassten Bilddaten von der kamerabasierten Erfassungseinrichtung. Die Anzeigeeinrichtung ist eingerichtet zum Anzeigen der durch die kamerabasierte Erfassungseinrichtung erfassten Bilddaten als Bilder.

Im Gegensatz zum Stand der Technik wird anmeldungsgemäß eine fest montierte Ticketerfassungsvorrichtung für ein Zugangskontrollsystem bereitgestellt, bei der aufgrund des Anzeigens der durch die kamerabasierte Erfassungseinrichtung erfassten Bilddaten als Bilder ein Präsentationsfehler zeitnah behebbar ist, so dass die Verzögerungen beim Einlesen von graphischen Ticketcodes erheblich reduziert werden können. Anders ausgedrückt, die durchschnittliche Zeitdauer eines Einlesevorgangs an einer anmeldungsgemäßen Ticketerfassungsvorrichtung kann signifikant reduziert werden.

Der Durchsatz an einem Einlass und/oder Auslass des Zugangskontrollsystems wird verbessert.

Die anmeldungsgemäße fest montierte Ticketerfassungsvorrichtung wird in einem Zugangskontrollsystem zum Erfassen von Ticketcodes eingesetzt, um das Überprüfen einer Zugangsberechtigung zu ermöglichen. Ein anmeldungsgemäßes Zugangskontrollsystem ist insbesondere ein ticketbasiertes Zugangskontrollsystem. Bei einem solchen Zugangskontrollsystem hängt die Berechtigung für ein Einlassen in einen kontrollierten Bereich bzw. zur Inanspruchnahme einer Dienstleistung in einem kontrollierten Bereich insbesondere von dem Vorhandensein eines gültigen Ticketmediums bzw. einer in einem graphischen Ticketcode des Ticketmediums als Dateninhalt enthaltenen gültigen Zugangsberechtigung ab.

Das anmeldungsgemäße Zugangskontrollsystem dient insbesondere zur Kontrolle einer Inanspruchnahme einer Transportdienstleistung oder Parkdienstleistung, indem das Einlassen in einen kontrollierten Bereich und/oder das Auslassen aus einem kontrollierten Bereich mit Hilfe der fest montierten Ticketerfassungsvorrichtung kontrolliert wird. Ein kontrollierter Bereich kann vorzugsweise ein Parkbereich für Kraftfahrzeuge, ein Innenbereich bzw. Innenraum eines Personentransportfahrzeugs (z.B. Bus, Schienenfahrzeug, Wasserfahrzeug etc.), ein Innenbereich eines Transportgebäudes bzw. -geländes, wie ein Bahnhof, eine Haltestelle etc., oder dergleichen sein. An einem Einlass und/oder einem Auslass des kontrollierten Bereichs kann mindestens eine fest montierte Ticketerfassungsvorrichtung des Zugangskontrollsystems angeordnet sein.

Eine anmeldungsgemäße fest montierte Ticketerfassungsvorrichtung ist fest, also insbesondere dauerhaft, an einem Träger befestigt oder in einem Gerät fest, also dauerhaft, integriert. Insbesondere ist eine anmeldungsgemäße fest montierte Ticketerfassungsvorrichtung keine tragbare Vorrichtung, wie ein mobiles Endgerät oder dergleichen.

Eine anmeldungsgemäße fest montierte Ticketerfassungsvorrichtung mit einer kamerabasierten Erfassungseinrichtung für optische bzw. graphische Ticketcodes kann im bestimmungsgemäßen Gebrauch, also insbesondere in einem montierten Zustand der Ticketerfassungsvorrichtung, nicht von einem Nutzer bewegt und/oder ausgerichtet werden. Ein von der fest montierten Ticketerfassungsvorrichtung zu lesender optischer bzw. graphischer Ticketcode kann von einem Nutzer zum Zweck des Lesens (nur) in den Erfassungsbereich der kamerabasierten Erfassungseinrichtung gehalten und dort durch bewegen des Ticketmediums zur kamerabasierten Erfassungseinrichtung ausgerichtet werden.

Darin unterscheidet sich die anmeldungsgemäße fest montierte Ticketerfassungsvorrichtung insbesondere von einer handgeführten Leseeinrichtung, beispielsweise von einem mobilen Endgerät, wie ein Smartphone mit Kamera. Ein solches mobiles, nicht fest montiertes Gerät hält ein Nutzer zum Zweck des Lesens beweglich in der Hand. Der Nutzer richtet das nicht fest montierte Gerät auf den zu lesenden graphischen Ticketcode aus, damit die kamerabasierte Erfassungseinrichtung, insbesondere eine Kamera, des nicht fest montierten Geräts den Ticketcode optisch erfasst. Das eigentliche Lesen bzw. Einlesen, also das Bestimmen des Dateninhalts des erfassten optischen Ticketcodes aus den erfassten bzw. aufgenommenen Bilddaten, kann dabei in einer auf dem mobilen Endgerät installierten Softwareanwendung erfolgen.

Eine anmeldungsgemäße fest montierte Ticketerfassungsvorrichtung kann in einem Zugangskontrollsystem bzw. ein Zugangskontrollsystem stationär betrieben werden, beispielsweise an Zugangskontrollbereichen, wie einem Einlass (z.B. Eingang oder Zufahrt) und/oder Auslass (z.B. Ausgang oder Ausfahrt), für ÖPV (Öffentlicher Personenverkehr)-Systeme, Parkhäuser, Parkplätze oder Gebäude.

Zudem kann eine anmeldungsgemäße fest montierte Ticketerfassungsvorrichtung mobil betrieben werden, insbesondere in Fahrzeugen des ÖPV, wie beispielsweise in Bussen, Straßenbahnen, U-Bahnen, Zügen, Fähren und Booten. In diesem Fall kann eine Ticketerfassungsvorrichtung fest an einem Träger eines Fahrzeugs montiert sein.

Fest montierte Ticketerfassungsvorrichtungen können insbesondere verwendet werden in sogenannten stationären Validatoren (auch "Fahrkartenentwerter" genannt), Durchgangssperren oder Durchfahrtssperren (auch "Gates" genannt), Ein- und Ausfahrtkontrollgeräten von Parkhäusern und Parkplätzen, Türlesern für den Gebäudezugang, fahrzeugmontierten Validatoren und/oder so genannten Fareboxes, die insbesondere in Bussen eingesetzt werden.

Wie bereits beschrieben wurde, umfasst eine anmeldungsgemäße Ticketerfassungsvorrichtung zumindest eine kamerabasierte Erfassungseinrichtung und eine mit der kamerabasierten Erfassungseinrichtung gekoppelte Auswerteeinrichtung. Insbesondere können die Bilddaten von Bildern, die durch die kamerabasierte Erfassungseinrichtung erfasst bzw. aufgenommen werden, der Auswerteeinrichtung über eine Kommunikationsverbindung bereitgestellt werden für eine weitere Verarbeitung.

Eine kamerabasierte Erfassungseinrichtung kann insbesondere ein CCD (chargecoupled device)-basiertes Kamerasystem sein, aber auch eine anderes Kamerasystem.

Der graphische Ticketcode, auch optischer Ticketcode genannt, ist insbesondere ein 1D Barcode (auch Balken und Strichcode genannt) oder 2D Barcode (auch Stapelcode genannt), insbesondere in Form eines QR-Codes. Jedoch kann der graphische Ticketcode auch ein anderer graphischer Code sein, wie ein 3D Barcode oder 4D Barcode.

Ein anmeldungsgemäßer Ticketcode enthält Dateninhalt. Der Dateninhalt kann insbesondere zumindest eine Zugangsberechtigung bzw. Nutzungsberechtigung für eine bestimmte Dienstleistung umfassen, wie eine Parkdienstleistung oder eine Personentransportdienstleistung. Die Zugangsberechtigung berechtigt also insbesondere einen Nutzer zum Eintreten/Einfahren in einen kontrollierten Bereich und/oder zum Austreten/Ausfahren aus einem kontrollierten Bereich. Die Zugangsberechtigung ist insbesondere gebildet durch ein Authentifizierungsdatum, wie z.B. eine Ticketinformation und/oder eine Nutzerkennung (z.B. ein Nutzername, eine Endgerätekennung, wie die IMEI, etc.). Eine Zugangsberechtigung zeigt demnach insbesondere an, dass ein Nutzer zum Passieren des Einlasses und/oder Auslasses bzw. zur Inanspruchnahme einer bestimmten Dienstleistung berechtigt ist.

Der Dateninhalt des Ticketcodes kann auch eine Identifikation eines Nutzer enthalten, anhand derer das Zugangskontrollsystem überprüft, ob für zu der Identifikation eine gültige Zugangsberechtigung bzw. Nutzungsberechtigung im Zugangskontrollsystem hinterlegt ist oder durch ein hinterlegtes Zahlmittel erworben werden kann (sogenanntes ID-basiertes Ticketing- oder Zugangskontrollsystem). Auf die anmeldungsgemäße Aufgabe hat das jedoch keinen Einfluss. Ohne Beschränkung der Allgemeinheit wird nachfolgend davon ausgegangen, dass der graphische Ticketcode die Zugangsberechtigung bzw. Nutzungsberechtigung eines Nutzers enthält.

Das Ticketmedium ist vorzugsweise ein mobiles Endgerät mit einem Display bzw. einem Bildschirm. Auf dem Display kann der Ticketcode angezeigt werden. Dies kann durch eine auf dem mobilen Endgerät installierte Anwendung gesteuert werden. Beispielhafte und nicht abschließende mobile Endgeräte sind Smartphones, Tablet-Computer, mobile Spielkonsolen, Laptops, Netbooks, Smart-Watches und ähnliche Wearables. Alternativ kann ein mobiles Endgerät ein dediziertes Ticketing-Gerät sein, das ausschließlich für eine Zugangsanwendung ausgelegt ist. Das Ticketmedium ist aber nicht auf ein mobiles Endgerät beschränkt, sondern kann auch ein anderes Ticketmedium sein, wie ein papier- oder kartenbasiertes Ticketmedium, beispielsweise mit einem auf einer Außenseite befindlichen, insbesondere aufgedruckten, graphischen Ticketcode.

Die Auswerteeinrichtung der Ticketerfassungsvorrichtung ist zumindest eingerichtet zum Extrahieren des Dateninhalts eines Ticketcodes aus den bereitgestellten Bilddaten. Die Auswerteeinrichtung umfasst insbesondere eine Auswertelogik zum Extrahieren des Dateninhalts aus dem in den bereitgestellten Bilddaten enthaltenen Ticketcode. Die Auswerteeinrichtung kann in der kamerabasierten Erfassungseinrichtung intergiert sein oder getrennt hiervon implementiert sein.

Anmeldungsgemäß weist die Ticketerfassungsvorrichtung mindestens eine optische Anzeigeeinrichtung auf, insbesondere ein Display bzw. einen Bildschirm. Die Anzeigeeinrichtung ist zumindest mit der kamerabasierten Erfassungseinrichtung kommunikativ gekoppelt. Über die Kommunikationsverbindung können die erfassten Bilddaten (die auch der Auswerteeinrichtung bereitgestellt werden) der Anzeigeeinrichtung zur Verfügung gestellt werden.

Die Anzeigeeinrichtung ist zum Anzeigen der zur Verfügung gestellten Bilddaten als Bilder eingerichtet. Die optische Anzeigeeinrichtung ist hierbei derart angeordnet, dass sie sich in dem Sichtfeld eines Nutzers befindet, der ein Ticketmedium in den Erfassungsbereich der kamerabasierten Erfassungseinrichtung hält.

Indem der Nutzer auf der Anzeigeeinrichtung die (derzeit) durch die kamerabasierte Erfassungseinrichtung erfassten Bilddaten als Bilder sehen kann, ist für den Nutzer ein Präsentationsfehler während des Einlesevorgangs unmittelbar ersichtlich. Dies ermöglicht dem Nutzer, eine (unmittelbare) Korrektur der Präsentation des Ticketcodes zielgerichtet vorzunehmen.

Bei einer Ausführungsform kann die kamerabasierte Erfassungseinrichtung ein Auflagenscanner sein. Ein Nutzer kann beim Auflegen des Ticketmediums auf einen Auflagenscanner nicht durch einen Blick auf sein Ticketmedium erkennen, welche Bilder durch den Auflagenscanner tatsächlich erfasst werden. Beispielsweise kann es dazu kommen, dass sich die Anzeige eines mobilen Endgeräts während des Umdrehens und Auflegen des mobilen Endgeräts ändert (beispielsweise aufgrund eines aktivierten Lagesensors, der automatisch eine Drehung des Bildschirminhalts bewirkt, einer Fehlbedienung, eines automatischen Wechsels in einen Ruhemodus etc.). Eine derartige Änderung ist anmeldungsgemäß durch die bildliche Wiedergabe der durch den Auflagenscanner erfassten Bilddaten auf der Anzeigeeinrichtung für den Nutzer unmittelbar ersichtlich, so dass der Nutzer gezielte Maßnahmen zur Beseitigung des Präsentationsfehlers ergreifen kann.

Anmeldungsgemäß wird durch die Darstellung der Bilddaten als Bilder auf der Anzeigeeinrichtung der Einlesevorgang eines Ticketcodes signifikant verbessert. Insbesondere wird durch die Darstellung der Bilddaten als Bilder der Nutzer durch eine geführte Mensch-Maschine Interaktion bei der Ausführung einer technischen Aufgabe unterstützt.

So betrifft der kognitive Inhalt der dem Nutzer dargestellten Informationen einen in dem technischen System, also insbesondere der anmeldungsgemäßen Ticketerfassungsvorrichtung, vorherrschenden internen Zustand (kann der Dateninhalt eines Ticketmediums extrahiert werden oder nicht) und ermöglicht es dem Nutzer, das technische System richtig zu bedienen, also insbesondere den Ticketcode so zu präsentieren, dass der Dateninhalt (fehlerfrei) extrahiert werden kann. Die Darstellung der Bilddaten als Bilder und damit die Darstellung eines internen Zustands der Ticketerfassungsvorrichtung (insbesondere der Auswerteeinrichtung in Verbindung mit der kamerabasierten Erfassungseinrichtung) veranlassen den Nutzer, mit der Ticketerfassungsvorrichtung zu interagieren, um insbesondere eine technische Fehlfunktionen (das Nichteinlesen bzw. Nichtextrahieren des Dateninhalts) zu vermeiden.

Erfindungsgemäß ist die optische Anzeigeeinrichtung eingerichtet zum Anzeigen der durch die kamerabasierte Erfassungseinrichtung augenblicklich erfassten Bilddaten als Bilder, insbesondere in unveränderter Form (insbesondere kann der Bildschirminhalt der Anzeigeeinrichtung 1:1 spiegeln, was der kamerabasierten Erfassungseinrichtung (auch Barcodescanner genannt) vorgehalten wird).

Insbesondere erfolgt eine Wiedergabe der augenblicklich erfassten Bilddaten als Bilder in Echtzeit (soweit dies technisch möglich ist). Dies meint insbesondere, dass eine elektronische Spiegelung der durch den Codeleser bzw. die kamerabasierte Erfassungseinrichtung erfassten Bilder durch die Anzeigeeinrichtung erfolgt. Insbesondere kann das erfasste Gesamtbild dargestellt werden. Die aktuellen Bilder bzw. die aktuellen Bilddaten der Kameraeinheit des Barcodescanners bzw. der Erfassungseinrichtung können nicht nur der Auswerteeinrichtung zur Ermittlung des Dateninhalts zur Verfügung gestellt, sondern können parallel auch in Echtzeit auf der Anzeigeeinrichtung der Ticketerfassungsvorrichtung für den Nutzer als Bilder sichtbar angezeigt werden.

Hierdurch kann der Nutzer leicht prüfen, ob und wie gut der Ticketcode von dem Barcodeleser aktuell erfasst wird. Eine Reaktion auf einen möglicherweise vorliegenden Präsentationsfehler ist hierdurch zielgerichtet möglich.

Neben dem schnelleren, erfolgreichen Lesevorgang kann sich zudem ein Lerneffekt bei der Handhabung durch den Nutzer einstellen (z.B. vorher Lagesensor des Ticketmediums abschalten, Helligkeit des Displays des Ticketmediums hochsetzen, Ticketmedium relativ zur fest montierten Ticketerfassungsvorrichtung an die richtige Stelle im richtigen Winkel halten etc.). Hierdurch können zukünftige Lesevorgänge an identischen oder zumindest ähnlich gebildeten fest montierten Ticketerfassungsvorrichtungen noch weiter beschleunigt werden.

Erfindungsgemäß umfasst die Ticketerfassungsvorrichtung mindestens ein mit der kamerabasierten Erfassungseinrichtung kommunikativ gekoppeltes Fehlerauswertemodul. Über die Kommunikationsverbindung können dem Fehlerauswertemodul die erfassten Bilddaten bereitgestellt werden. Das Fehlerauswertemodul kann beispielsweise in der Auswerteeinrichtung integriert sein oder auch ein eigenständiges Modul sein.

Das Fehlerauswertemodul ist eingerichtet zum Bestimmen eines Präsentationsfehlers, insbesondere eines bestimmten Präsentationsfehlers bzw. -typs, basierend auf den erfassten Bilddaten des Ticketmediums und mindestens einem Fehlerkriterium. Insbesondere ist anmeldungsgemäß festgestellt worden, dass verschiedene Präsentationsfehler vorliegen können. Beispielhafte und nicht abschließende Präsentationsfehler sind ein Unvollständigkeitsfehler bzw. eine nicht vollständige Darstellung des graphischen Ticketcodes (dies umfasst insbesondere auch den Fall, dass überhaupt kein Ticketcode dargestellt wird), Fremdlichtfehler (beispielsweise kann es zu störenden Reflexionen durch Fremdlicht auf dem Ticketmedium kommen), Helligkeitsfehler (z.B. kann die für das Display des Ticketmediums eingestellte Helligkeit bzw. Helligkeitsstufe ein erfolgreiches Extrahieren des Dateninhalts verhindern), Kontrastfehler (z.B. kann der/die für das Display des Ticketmediums eingestellte Kontrast bzw. Kontraststufe ein erfolgreiches Extrahieren des Dateninhalts verhindern), Schärfefehler (z.B. können die erfassten Bilder zu unscharf sein).

Um zu bestimmen, ob ein bestimmter Präsentationsfehler aus einer Mehrzahl von (vorgenannten) Präsentationsfehlern vorliegt, kann für jeden Präsentationsfehler insbesondere ein zughöriges Fehlerkriterium vorab definiert sein. Das Fehlerkriterium kann angeben, wann ein bestimmter Präsentationsfehler vorliegt (oder nicht vorliegt).

Erfindungsgemäß ist (insbesondere entsprechend der vorgenannten Fehlerarten) das mindestens eine Fehlerkriterium ausgewählt aus der Gruppe, bestehend aus:
- Ticketcode-Vollständigkeitskriterium,
- Größenkriterium,
- Fremdlichtkriterium,
- Helligkeitskriterium,
- Kontrastkriterium,
- Verkippungskriterium, und
- Schärfekriterium.

Erfindungsgemäß ist für zumindest zwei unterschiedliche Präsentationsfehler bzw. Präsentationsfehlerarten jeweils ein Fehlerkriterium vordefiniert. Das Fehlerkriterium kann insbesondere mindestens einen Bildschirminhalt vorgeben, bei dem ein entsprechender Präsentationsfehler vorliegt.

Zum Bestimmen eines Präsentationsfehlers kann insbesondere ein Vergleich der erfassten Bilddaten mit dem mindestens einen Fehlerkriterium durchgeführt werden. Wenn das mindestens eine Fehlerkriterium erfüllt ist, dann kann insbesondere festgestellt werden, dass ein entsprechender Präsentationsfehler vorliegt.

Vorzugsweise kann das Bestimmen des Präsentationsfehlers kontinuierlich durchgeführt werden, insbesondere bis zu einer Detektion, dass kein Präsentationsfehler mehr vorliegt. Dies meint insbesondere, dass während des Lesevorgangs kontinuierlich oder zyklisch der genannte Vergleich durchgeführt werden kann, zumindest bis das Fehlerkriterium nicht mehr erfüllt ist.

Gemäß einer bevorzugten Ausführungsform der anmeldungsgemäßen Ticketerfassungsvorrichtung kann die Ticketerfassungsvorrichtung mindestens ein mit dem Fehlerauswertemodul kommunikativ gekoppeltes Fehlerausgabemodul umfassen. Über die Kommunikationsverbindung kann insbesondere ein bestimmter Präsentationsfehler dem Fehlerausgabemodul bereitgestellt werden. Das Fehlerausgabemodul kann in dem Fehlerauswertemodul integriert sein.

Das Fehlerausgabemodul kann eingerichtet sein zumindest zum Bewirken eines Ausgebens einer Fehlermeldung durch die Ticketerfassungsvorrichtung, wenn ein Präsentationsfehler bestimmt wird. Wenn ein Bestimmen eines Präsentationsfehlers kontinuierlich oder zyklisch erfolgt, kann das Fehlerausgabemodul während des Vorliegens des Präsentationsfehlers kontinuierlich oder zyklisch ein Ausgeben der Fehlermeldung bewirken. Ein Ausgeben der Fehlermeldung dient insbesondere dazu, den Nutzer über den bestimmten Präsentationsfehler zu informieren (so lange dieser vorliegt bzw. detektiert wird). Hierdurch kann der Lesevorgang weiter beschleunigt werden.

Alternativ oder zusätzlich kann die Ticketerfassungsvorrichtung mindestens ein mit der Auswerteeinrichtung kommunikativ gekoppeltes Lesebestätigungsmodul umfassen. Über die Kommunikationsverbindung kann das Lesebestätigungsmodul über ein erfolgreiches Extrahieren des Dateninhalts informiert werden.

In einer Ausführungsform kann das Lesebestätigungsmodul in der Auswerteeinrichtung integriert sein und beispielsweise zum Detektieren eines (erfolgreichen bzw. fehlerfreien) Extrahierens des Dateninhalts eingerichtet sein. Alternativ oder zusätzlich kann bei (erfolgreichem) Extrahieren des Dateninhalts geschlossen werden, dass kein Präsentationsfehler vorliegt.

Das Lesebestätigungsmodul kann eingerichtet sein zumindest zum Bewirken eines Ausgebens einer Lesebestätigungsmeldung durch die Ticketerfassungsvorrichtung, wenn ein erfolgreiches Extrahieren des Dateninhalts des graphischen Ticketcodes aus den Bilddaten erfolgt ist, also insbesondere detektiert wurde.

Gemäß einer weiteren Ausführungsform der anmeldungsgemäßen Ticketerfassungsvorrichtung kann die Ticketerfassungsvorrichtung eingerichtet sein zum Ausgeben eines optischen Signals, eines akustischen Signals und/oder eines haptischen Signals (z.B. Vibrationssignal), basierend auf einer erhaltenen Fehlermeldung und/oder Lesebestätigungsmeldung. Vorzugsweise kann das Fehlerausgabemodul und/oder das Lesebestätigungsmodul mit der Anzeigeeinrichtung gekoppelt sein und insbesondere zum Ansteuern der Anzeigeeinrichtung eingerichtet sein, vorzugswese mit der Fehlermeldung und/oder der Lesebestätigungsmeldung bzw. basierend auf einer solchen Meldung.

Beispielsweise kann die Anzeigeeinrichtung oder eine optionale weitere Anzeigeeinrichtung der Ticketerfassungsvorrichtung ein optisches Signal ausgeben, basierend auf der Fehlermeldung und/oder einer Lesebestätigungsmeldung. So kann die Anzeigeeinrichtung beispielsweise abhängig von der erhaltenen Meldung die Hintergrundfarbe ändern, um den Nutzer über das Vorliegen eines (bestimmten) Präsentationsfehlers und/oder über ein erfolgreiches Auslesen des Dateninhalts zu informieren.

Auch kann optional die Ticketerfassungsvorrichtung ein Lautsprechermodul umfassen, eingerichtet zum Ausgeben eines akustischen Signals. Beispielsweise kann das Lautsprechermodul abhängig von der erhaltenen Meldung unterschiedliche akustische Signale ausgeben, um den Nutzer über das Vorliegen eines (bestimmten) Präsentationsfehlers und/oder über ein erfolgreiches Auslesen des Dateninhalts zu informieren.

Ferner kann optional ein Vibrationsmodul in der Ticketerfassungsvorrichtung angeordnet sein. Vorzugsweise kann die kamerabasierte Erfassungseinrichtung, insbesondere in Form eines Auflagescanners, eine Vibrationsfunktion als Vibrationsmodul umfassen und/oder ein Vibrationsmodul kann unmittelbar benachbart zu der Erfassungseinrichtung angeordnet sein. Insbesondere kann das Vibrationsmodul eingerichtet sein, eine Auflagefläche eines Auflagescanners in Vibrationen zu setzen. Beispielsweise kann das Vibrationsmodul abhängig von der erhaltenen Meldung unterschiedliche haptische Signale bzw. Vibrationssignale ausgeben, insbesondere an die Auflagefläche, um den Nutzer über das Vorliegen eines (bestimmten) Präsentationsfehlers und/oder über ein erfolgreiches Auslesen des Dateninhalts zu informieren. Über die Auflagefläche kann das Vibrationssignal insbesondere auf das Ticketmedium und eine Hand des Nutzers übertragen werden. In einfacher Weise erfährt der Nutzer eine Rückkopplung über den Verlauf des Einlesevorgangs.

Gemäß einer bevorzugten Ausführungsform der Ticketerfassungsvorrichtung kann, durch die Ticketerfassungsvorrichtung, während des Vorliegens eines Präsentationsfehlers mindestens ein erstes (optisches, akustisches und/oder haptisches) Signal zumindest nahezu kontinuierlich oder zyklisch ausgegeben werden, und insbesondere kann, durch die Ticketerfassungsvorrichtung, bei Detektion einer fehlerfreien Präsentation des graphischen Ticketcodes bzw. bei einer Detektion einer Lesebestätigung mindestens ein zweites (optisches, akustisches und/oder haptisches) Signal ausgegeben werden. Das mindestens eine zweite Signal kann sich von dem ersten Signal unterscheiden.

Darüber hinaus kann, gemäß einer weiteren bevorzugten Ausführungsform der anmeldungsgemäßen Ticketerfassungsvorrichtung, die optische Anzeigeeinrichtung eingerichtet sein zum Imitieren eines bestimmten Präsentationsfehlers, basierend auf einer erhaltenen Fehlermeldung. Das Imitieren eines bestimmten Präsentationsfehlers kann insbesondere eine Änderung der Helligkeit der optischen Anzeigeeinrichtung umfassen, basierend auf einem als Präsentationsfehler bestimmten Helligkeitsfehler. Anders ausgedrückt, kann der Bildschirminhalt der Anzeigeeinrichtung mindestens eine Eigenschaft imitieren bzw. adaptieren, die einer Eigenschaft des augenblicklich erfassten Bildes des Ticketmediums entspricht. Wenn zum Beispiel der Bildschirm eines vorgehaltenen mobilen Endgeräts zu dunkel ist, also ein Helligkeitsfehler vorliegt, kann auch der anzeigende Bildschirm, also die Anzeigeeinrichtung, mit einer entsprechenden Helligkeitsstufe eingestellt werden.

Wie bereits beschrieben wurde, kann der Nutzer vorzugsweise über einen bestimmten Präsentationsfehler informiert werden. Gemäß einer weiteren Ausführungsform der anmeldungsgemäßen Ticketerfassungsvorrichtung kann die optische Anzeigeeinrichtung eingerichtet sein zum Ausgeben eines den bestimmten Präsentationsfehlers spezifizierenden Textes (z.B. "Auf Ihrem Handy ist kein Barcode zu sehen", "Der Kontrast ist nicht ausreichend", "Der Bildschirm ist zu dunkel" etc.), basierend auf einer erhaltenen Fehlermeldung.

Optional können auch optische Symbole ausgegeben werden und/oder eine Sprachnachricht mit einem den bestimmten Präsentationsfehler spezifizierenden Text durch ein Lautsprechermodul ausgegeben werden. Der Nutzer kann noch schneller einen Präsentationsfehler beheben.

Gemäß einer weiteren Ausführungsform der Ticketerfassungsvorrichtung kann die Ticketerfassungsvorrichtung mindestens ein mit dem Fehlerauswertemodul kommunikativ gekoppeltes Anweisungsmodul umfassen. Insbesondere kann über die Kommunikationsverbindung der bestimmte Präsentationsfehler dem Anweisungsmodul zur Verfügung gestellt werden. Das Anweisungsmodul kann in der Auswerteeinrichtung integriert sein.

Das Anweisungsmodul kann eingerichtet sein zum Bestimmen mindestens einer ausgebbaren Nutzeranweisung zur Fehlerbeseitigung, basierend zumindest auf dem bestimmten Präsentationsfehler und einer Mehrzahl von für den mindestens einen Präsentationsfehler gespeicherten Nutzeranweisungen. Das Anweisungsmodul kann eingerichtet sein zum Bewirken eines Ausgebens der bestimmten Anweisung, beispielsweise in Form eines Anweisungstextes (z.B. "Halten Sie das Ticketmedium näher an die Kamera", "Halten Sie das Ticketmedium weiter weg von der Kamera", "Kippen Sie das Ticketmedium in eine bestimmte Richtung", "Erhöhen Sie die Helligkeit", "Reduzieren Sie die Helligkeit" etc.). Insbesondere kann basierend auf historischen Daten eine geeignete Anweisung für einen bestimmten Präsentationsfehler bestimmt werden oder diese auf vorab durchgeführte Tests und/oder Erfahrungswerte beruhen. Das Ausgeben kann insbesondere durch die Anzeigeeinrichtung erfolgen. Alternativ oder zusätzlich kann ein Ausgeben auch erfolgen durch ein Lautsprechermodul, eine weitere Anzeigeeinrichtung und/oder dergleichen.

Wie bereits beschrieben wurde, kann das Fehlerauswertemodul vorzugsweise eingerichtet sein zum Bestimmen der ausgebbaren Anweisung, basierend auf den erfassten Bilddaten und historischen (Bild-)Daten, insbesondere basierend auf einem Vergleich der genannten Daten. Jedem historischen Bilddatum kann eine Anweisung zugeordnet sein, die den Präsentationsfehler behebt, der Grundlage des historischen Bilddatums ist.

Gemäß einer bevorzugten Ausführungsform der anmeldungsgemäßen Ticketerfassungsvorrichtung kann die Ticketerfassungsvorrichtung mindestens eine mit dem Fehlerausgabemodul kommunikativ gekoppelte Nahfeldkommunikationsschnittstelle umfassen. Die Nahfeldkommunikationsschnittstelle kann eingerichtet sein zum Aussenden einer Fehlermeldungsnachricht an das Ticketmedium in Form eines mobilen Endgeräts. Das mobile Endgerät kann insbesondere über eine Nahfeldkommunikationsschnittstelle verfügen, die zu der Nahfeldkommunikationsschnittstelle der Ticketerfassungsvorrichtung korrespondiert bzw. kompatibel ist. Vorzugsweise kann jeweils eine NFC-Schnittstelle vorgesehen sein.

Die Fehlermeldungsnachricht kann erste Instruktionen enthalten, die bei einer Ausführung durch einen Prozessor des mobilen Endgeräts das mobile Endgerät veranlassen, mindestens ein erstes Hinweissignal auszugeben, insbesondere ein erstes Vibrationssignal. Mit anderen Worten kann das mobile Endgerät veranlasst werden, ein erstes Vibrationssignal auszugeben, welches insbesondere auf das Vorliegen eines Präsentationsfehlers hindeutet.

Vorzugsweise zusätzlich kann, gemäß einer weiteren Ausführungsform der Ticketerfassungsvorrichtung, die Ticketerfassungsvorrichtung mindestens eine mit dem Fehlerausgabemodul kommunikativ gekoppelte Nahfeldkommunikationsschnittstelle umfassen, eingerichtet zum Aussenden einer Lesebestätigungsmeldungsnachricht an das Ticketmedium in Form eines mobilen Endgeräts. Das mobile Endgerät kann insbesondere über eine Nahfeldkommunikationsschnittstelle verfügen, die zu der Nahfeldkommunikationsschnittstelle der Ticketerfassungsvorrichtung korrespondiert bzw. kompatibel ist. Vorzugsweise kann jeweils eine NFC-Schnittstelle vorgesehen sein.

Die Lesebestätigungsmeldungsnachricht kann zweite Instruktionen enthalten, die bei einer Ausführung durch einen Prozessor des mobilen Endgeräts das mobile Endgerät veranlassen, mindestens ein zweites Hinweissignal auszugeben, insbesondere ein zweites Vibrationssignal. Insbesondere kann sich das erste Hinweissignal von dem zweiten Hinweissignal unterscheiden. Mit anderen Worten kann das mobile Endgerät veranlasst werden, ein zweites Vibrationssignal auszugeben, welches insbesondere auf das Vorliegen eines erfolgreichen Auslesens des Dateninhalts hindeutet.

Es versteht sich, dass eine andere Nahfeldtechnologie genutzt werden kann und/oder mindestens ein anderes Hinweissignal ausgegeben werden kann, wie ein akustisches Hinweissignal und/oder ein optisches Hinweissignale (insbesondere bei einem Ticketmedium mit zwei (gegenüberliegenden) Displays).

Beispielsweise kann die Ticketerfassungsvorrichtung durch die Nahfeldkommunikationsschnittstelle bei fehlerhaften Einleseversuchen des Ticketcodes ein erstes Datensignal über Nahfeldkommunikation (z.B. NFC) aussenden. Das mobile Endgerät kann das erste Datensignal empfangen. Das erste Datensignal kann erste Instruktionen enthalten. Eine auf dem mobilen Endgerät installierte Zugangsanwendung kann das empfangene erste Datensignal, insbesondere die ersten Instruktionen, auswerten und vorzugsweise das erste Vibrationssignal auslösen. Zusätzlich kann beispielsweise die Ticketerfassungsvorrichtung durch die Nahfeldkommunikationsschnittstelle bei erfolgreichem Einlesen des Ticketcodes ein zweites Datensignal über Nahfeldkommunikation (z.B. NFC) aussenden. Das mobile Endgerät kann das zweite Datensignal empfangen. Das zweite Datensignal kann zweite Instruktionen enthalten. Die auf dem mobilen Endgerät installierte Zugangsanwendung kann das empfangene zweite Datensignal, insbesondere die zweiten Instruktionen, auswerten und vorzugsweise das zweite Vibrationssignal auslösen. Der Einlesevorgang kann noch weiter beschleunigt werden.

Gemäß einer weiteren bevorzugten Ausführungsform der anmeldungsgemäßen Ticketerfassungsvorrichtung kann die Ticketerfassungsvorrichtung mindestens ein mit der kamerabasierten Erfassungseinrichtung gekoppeltes Ticketmediumdetektionsmodul umfassen. Über die Kommunikationsverbindung können erfasste Bilddaten dem Ticketmediumdetektionsmodul bereitgestellt werden. Das Ticketmediumdetektionsmodul kann beispielsweise in der Auswerteeinrichtung integriert sein.

Das Ticketmediumdetektionsmodul kann eingerichtet sein zum Detektieren eines Vorhandenseins eines Ticketmediums in dem Erfassungsbereich der kamerabasierten Erfassungseinrichtung, also insbesondere eines in den Erfassungsbereich zumindest teilweise gehaltenen Ticketmediums. Vorzugsweise kann das Ticketmediumdetektionsmodul eingerichtet sein zum Detektieren eines Wechsels von einem Nicht-Vorhandensein eines Ticketmediums zu einem Vorhandensein eines Ticketmediums und/oder eines Wechsels von einem Vorhandensein eines Ticketmediums zu einem Nicht-Vorhandensein eines Ticketmediums.

Das Ticketmediumdetektionsmodul kann eingerichtet sein zum Bewirken eines Anzeigens der durch die kamerabasierte Erfassungseinrichtung erfassten Bilddaten als Bilder nur bei Detektion des Vorhandenseins des Ticketmediums in dem Erfassungsbereich der kamerabasierten Erfassungseinrichtung.

Während des Nicht-Vorhandenseins eines Ticketmediums in dem Erfassungsbereich kann die Anzeigeeinrichtung beispielsweise in einen Ruhemodus versetzt werden. Vorzugsweise kann eine bestimmte Zeitdauer (z.B. 1 min, 5 min etc.) vordefiniert sein. Wenn das Ticketmediumdetektionsmodul feststellt, dass nach Ablauf dieser Zeitdauer weiterhin ein Nicht-Vorhandensein eines Ticketmediums in dem Erfassungsbereich detektiert wird, kann ein Umschalten des Betriebsmodus der Anzeigeeinrichtung in einen Ruhemodus bewirkt werden. Hierdurch kann Energie gespart werden. Es versteht sich, dass während der Detektion eines Nicht-Vorhandenseins eines Ticketmediums die Anzeigeeinrichtung auch andere Informationen anzeigen kann.

Insbesondere kann mindestens ein Umschaltkriterium vordefiniert sein. Vorzugsweise kann das mindestens eine Umschaltkriterium ein Vorliegen eines Wechsels von einem Nicht-Vorhandensein eines Ticketmediums zu einem Vorhandensein eines Ticketmediums und/oder eines Wechsels von einem Vorhandensein eines Ticketmediums zu einem Nicht-Vorhandensein eines Ticketmediums definieren.

Das Ticketmediumdetektionsmodul kann zum Auswerten der erfassten Bilddaten zusammen mit dem mindestens einen Umschaltkriterium eingerichtet sein. Insbesondere kann das Ticketmediumdetektionsmodul feststellen, ob die (augenblicklich) erfassten Bilddaten das mindestens eine Umschaltkriterium erfüllen. Ist dies der Fall, kann das Ticketmediumdetektionsmodul ein Umschalten bewirken, also insbesondere ein Anzeigen der durch die kamerabasierte Erfassungseinrichtung erfassten Bilddaten als Bilder bewirken (bei Detektion eines Wechsels von einem Nicht-Vorhandensein eines Ticketmediums zu einem Vorhandensein eines Ticketmediums) oder ein Anzeigen von anderen Information (bei Detektion eines Wechsels von einem Vorhandensein eines Ticketmediums zu einem Nicht-Vorhandensein eines Ticketmediums) und/oder ein Setzen in den Ruhemodus (bei Detektion eines Ablaufs der genannten Zeitdauer) bewirken. Das mindestens eine Umschaltkriterium kann zum Bespiel einen Umfang einer Bildänderung aus Sicht der kamerabasierten Erfassungseinrichtung definieren.

Gemäß einer weiteren Ausführungsform der anmeldungsgemäßen Ticketerfassungsvorrichtung kann die Ticketerfassungsvorrichtung mindestens eine Freigabeeinrichtung umfassen, eingerichtet zum Erzeugen eines Freigabesignals, basierend auf einem ausgewerteten Dateninhalt des graphischen Ticketcodes. Vorzugsweise kann bei dieser Ausführungsform die anmeldungsgemäße Ticketerfassungsvorrichtung in einem Gate integriert sein.

Wie bereits beschrieben wurde, kann der Dateninhalt (insbesondere eine vorbeschriebene Zugangsberechtigung) ausgewertet werden. Ergibt die Auswertung eine Berechtigung des Nutzers zum Passieren des Gates, kann das Freigabesignal erzeugt werden. Insbesondere kann ein Aktor des Gates mit dem Freigabesignal angesteuert werden, um ein Sperrelement zu verstellen, so dass der Nutzer das Gate passieren kann. Ergibt die Auswertung eine Nicht-Berechtigung des Nutzers zum Passieren des Gates, kann das Gate gesperrt bleiben.

Ein weiterer Aspekt der vorliegenden Anmeldung ist ein Verfahren nach Anspruch 10.

Ein noch weiterer Aspekt der Anmeldung ist ein Zugangskontrollsystem für ein Personentransportsystem oder ein Parksystem, umfassend:
- mindestens eine mit mindestens einem Gate (insbesondere eine Durchgangssperre oder Durchfahrtssperre) kommunikativ gekoppelte und zuvor beschriebene Ticketerfassungsvorrichtung,
- wobei das Zugangskontrollsystem mindestens eine mit einer Auswerteeinrichtung (der Ticketerfassungsvorrichtung oder eines Backendsystems des Zugangskontrollsystems) kommunikativ gekoppelte Freigabeeinrichtung umfasst, eingerichtet zum Erzeugen eines Freigabesignals, basierend auf einem ausgewerteten Dateninhalt eines extrahierten graphischen Ticketcodes, und
- das Gate eingerichtet ist zum Ermöglichen eines Passierens (insbesondere Durchgehens oder Durchfahrens) durch das Gate, basierend auf einem erhaltenen Freigabesignal.

Das Gate kann insbesondere über ein Sperrelement verfügen. Zum Ermöglichen des Passierens des Gates kann ein Aktor des Sperrelements mit dem Freigabesignal angesteuert werden. Hierdurch kann insbesondere ein Bewegen des Sperrelements bewirkt werden.

Das Gate kann alternativ oder zusätzlich zu dem Sperrelement über eine optische Anzeige verfügen, die die von der Freigabeeinrichtung angesteuert wird und dem Nutzer das Passieren durch ein visuelles Signal verbietet oder erlaubt (z.B. eine Ampel).

Das Zugangskontrollsystem umfasst mindestens eine Auswerteeinrichtung. Hierbei kann die mindestens eine Auswerteeinrichtung die (lokale) Auswerteeinrichtung der zuvor beschriebenen Ticketerfassungsvorrichtung oder eine weitere Auswerteeinrichtung eines Backendsystems des Zugangskontrollsystems sein. Die Auswerteeinrichtung kann eingerichtet sein zum Prüfen des Dateninhalts, insbesondere einer Zugangsberechtigung bzw. Zugangscode. Insbesondere kann die Zugangsberechtigung in herkömmlicherweise überprüft werden.

Bei einem Zugangskontrollsystem, das insbesondere ein Bestandteil eines Personentransportsystems oder Parksystems sein kann, kann es erforderlich sein, dass der Nutzer sich bei diesem System vor der erstmaligen Nutzung einer anmeldungsgemäßen Ticketerfassungsvorrichtung (beispielsweise um eine Transportdienstleistung oder Parkdienstleistung zu nutzen) registriert.

Bei einer erfolgreichen Registrierung wird in dem Zugangskontrollsystem, insbesondere dem Backendsystem des Zugangskontrollsystems (auch Hintergrundsystem genannt), ein Nutzerkonto für den registrierten Nutzer angelegt, indem Identifikationsdaten in dem Backendsystem gespeichert werden, wie eine eindeutige (Nutzer-)Kennung (ID) des Nutzers, Authentisierungsdaten, z.B. ein Passwort, und Abrechnungsdaten, z.B. Kreditkartendaten oder Kontoverbindungen, Adressdaten oder sonstige Daten für die Abrechnung. In Gesamtheit werden diese Daten Nutzerstammdaten genannt. Zudem kann auf dem mobilen Endgerät des registrierten Nutzers eine Zugangsanwendung in Form einer sogenannten App installiert sein. Die Zugangsberechtigung kann beispielsweise durch mindestens eines der zuvor genannten Daten (z.B. eindeutige (Nutzer-)Kennung) und/oder Ticketinformationen) gebildet sein.

Darüber hinaus kann das Zugangskontrollsystem bei einer Ausführungsform mindestens ein zuvor beschriebenes Ticketmedium umfassen.

Ein zuvor beschriebenes Modul, ein Element, eine Einrichtung etc. kann zumindest teilweise Hardwareelemente (z.B. Prozessor, Speichermittel etc.) und/oder zumindest teilweise Softwareelemente (z.B. ausführbaren Code) umfassen. Es sei ferner angemerkt, dass Begriffe, wie "erste"; "zweite", "weitere" etc. nicht eine Reihenfolge angeben, sondern insbesondere zur Unterscheidung zweier Elemente (z.B. Gate, Bereich etc.) dienen.

Die Merkmale der Ticketerfassungsvorrichtungen, Verfahren und Zugangskontrollsystem sind frei miteinander kombinierbar.

Es gibt nun eine Vielzahl von Möglichkeiten, die anmeldungsgemäße fest montierte Ticketerfassungsvorrichtung, das anmeldungsgemäße Zugangskontrollsystem und das anmeldungsgemäße Verfahren auszugestalten und weiterzuentwickeln. Hierzu sei einerseits verwiesen auf die den unabhängigen Patentansprüchen nachgeordneten Patentansprüche, andererseits auf die Beschreibung von Ausführungsbeispielen in Verbindung mit der Zeichnung. In der Zeichnung zeigt:
- Fig. 1: eine schematische Ansicht einer fest montierten Ticketerfassungsvorrichtung,
- Fig. 2: eine schematische Ansicht eine Ausführungsbeispiels einer fest montierten Ticketerfassungsvorrichtung gemäß der vorliegenden Anmeldung,
- Fig. 3a-f: schematische Ansichten von beispielhaften typischen Bildern, die von der kamerabasierten Erfassungseinrichtung einer fest montierten Ticketerfassungsvorrichtung gemäß der vorliegenden Anmeldung von vorgehaltenen Tickets erfasst werden können,
- Fig. 4: eine schematische Ansicht eines weiteren Ausführungsbeispiels einer fest montierten Ticketerfassungsvorrichtung gemäß der vorliegenden Anmeldung,
- Fig. 5: eine schematische Ansicht eines Ausführungsbeispiels eines Zugangskontrollsystems gemäß der vorliegenden Anmeldung,
- Fig. 6: eine schematische Ansicht eines weiteren Ausführungsbeispiels eines Zugangskontrollsystems gemäß der vorliegenden Anmeldung, und
- Fig. 7: ein Diagramm eines Ausführungsbeispiels eines Verfahrens gemäß der vorliegenden Anmeldung.

Nachfolgend werden für ähnliche Elemente ähnliche Bezugszeichen verwendet.

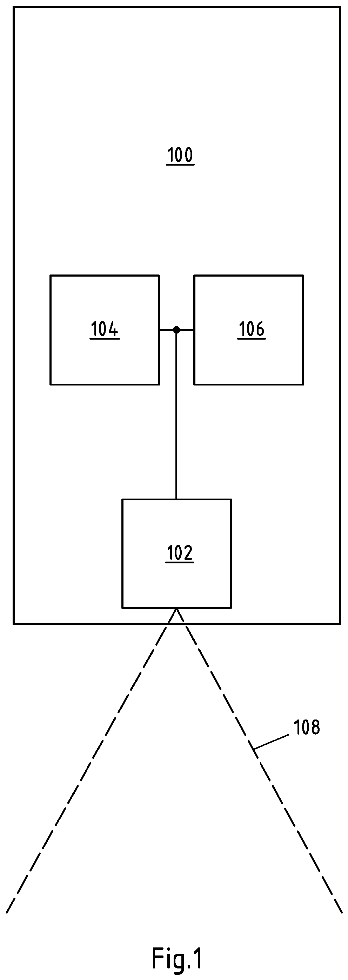

Die Figur 1 zeigt eine schematische Ansicht einer fest montierten Ticketerfassungsvorrichtung 100.

Die dargestellte Ticketerfassungsvorrichtung 100 ist bei einem bestimmungsgemäßen Gebrauch, also wenn Ticketcodes erfasst werden sollen, fest an einem Träger befestigt oder fest in einer weiteren Vorrichtung (z.B. ein Gate oder ein Teil eines Gates) montiert bzw. integriert. Die weitere Vorrichtung wiederum ist insbesondere fest an einem Träger (z.B. ein Boden) montiert.

Die dargestellte Ticketerfassungsvorrichtung 100 umfasst eine kamerabasierte Erfassungseinrichtung 102 (z.B. ein CCD-basiertes Kamerasystem, CMOS-Chip (auch Active Pixel Sensor genannt) -basiertes Kamerasystem oder dergleichen), eine Auswerteeinrichtung 104 und eine optische Anzeigeeinrichtung 106, insbesondere einen Bildschirm 106. Wie aus der Figur 1 zu erkennen ist, sind in dem vorliegenden Ausführungsbeispiel die Erfassungseinrichtung 102, die Auswerteeinrichtung 104 und die Anzeigeeinrichtung 106 kommunikativ miteinander gekoppelt. Dies meint insbesondere, dass die genannten Einrichtungen Daten miteinander austauschen können.

Ferner ist schematisch ein Erfassungsbereich der kamerabasierten Erfassungseinrichtung 102 dargestellt und mit dem Bezugszeichen 108 gekennzeichnet.

Die kamerabasierte Erfassungseinrichtung 102 ist eingerichtet zum Erfassen bzw. Aufnehmen von Bildern eines graphischen bzw. optischen Ticketcodes eines (im vorliegenden Ausführungsbeispiel nicht dargestellten) Ticketmediums, welches sich in dem Erfassungsbereich 108 der kamerabasierten Erfassungseinrichtung 102 befindet. Insbesondere kann ein Nutzer das Ticketmedium mit dem graphischen Ticketcode in den Erfassungsbereich 108 halten, insbesondere während eines Einlesevorgangs.

Aus den erfassten Bildern können erfasste Bilddaten erstellt und der Auswerteeinrichtung 104 und der Anzeigeeinrichtung 106 insbesondere in Echtzeit zur Verfügung gestellt werden.

Die Auswerteeinrichtung 104 ist eingerichtet zumindest zum Erhalten der erfassten Bilddaten von der kamerabasierten Erfassungseinrichtung und zum Extrahieren eines Dateninhalts des graphischen Ticketcodes aus den erhaltenen erfassten Bilddaten. Anders ausgedrückt, die Auswerteeinrichtung 104 ist eingerichtet zum Auslesen des Dateninhalts des Ticketcodes. Wie bereits beschrieben wurde, kann der Ticketcode insbesondere ein 1D Barcode oder 2D Barcode sein und als Dateninhalt zumindest eine Zugangsberechtigung enthalten.

Die optische Anzeigeeinrichtung 106 ist eingerichtet zum Anzeigen der durch die kamerabasierte Erfassungseinrichtung 102 erfassten und insbesondere bereitgestellten Bilddaten als Bilder. Insbesondere erfolgt eine Wiedergabe der augenblicklich aufgenommenen Bilder dynamisch bzw. in Echtzeit (soweit dies technisch möglich ist). Die augenblicklich durch die kamerabasierte Erfassungseinrichtung 102 erfassten Bilder werden insbesondere elektronisch durch die Anzeigeeinrichtung 106 gespiegelt und insbesondere so dem Nutzer des Ticketmediums visualisiert.

Durch die Darstellung der augenblicklich erfassten Bilder kann der Nutzer zeitnah einen Präsentationsfehler erkennen und zielgerichtet nachsteuern, so dass ein Einlesen bzw. Extrahieren des Dateninhalts durch die Auswerteeinrichtung 104 (zeitnah und insbesondere fehlerfrei) erfolgen kann.

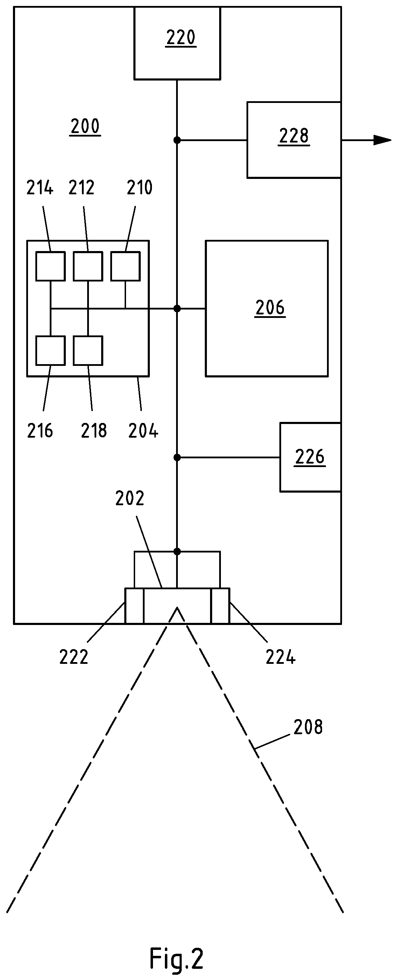

Die Figur 2 zeigt eine schematische Ansicht eines Ausführungsbeispiels einer fest montierten Ticketerfassungsvorrichtung 200 gemäß der vorliegenden Anmeldung. Zur Vermeidung von Wiederholungen werden nachfolgend im Wesentlichen nur die Unterschiede zu dem vorherigen Ausführungsbeispiel beschrieben, und ansonsten wird auf die vorherigen Ausführungen verwiesen.

Wie aus der Figur 2 zu entnehmen ist, weist die Auswerteeinrichtung 204 vorliegend ein Modul 210 und eine Mehrzahl von optionalen Modulen 212 bis 218 auf. Es versteht sich, dass bei Varianten der Anmeldung diese Module auch getrennt von der Auswerteeinrichtung implementiert sein können.

Die Ticketerfassungsvorrichtung 200 umfasst ein mit der kamerabasierten Erfassungseinrichtung 202 kommunikativ gekoppeltes Fehlerauswertemodul 210. Das Fehlerauswertemodul 210 ist eingerichtet zum Bestimmen eines Präsentationsfehlers, basierend auf den erfassten Bilddaten des Ticketmediums und mindestens einem (vordefinierten) Fehlerkriterium. Das Fehlerkriterium kann insbesondere einen Bildschirminhalt repräsentieren, bei dem ein Präsentationsfehler vorliegt. Beispielsweise durch ein Vergleichen der erfassten Bilddaten mit Referenzbilddaten, die repräsentativ sind für das mindestens eine Fehlerkriterium, kann ein Präsentationsfehler durch das Fehlerauswertemodul 210 bestimmt werden.

Bei einer Feststellung eines (bestimmten) Präsentationsfehlers kann diese Information dem Fehlerausgabemodul 212 bereitgestellt werden. Bei Varianten der Anmeldung können Fehlerauswertemodul und Fehlerausgabemodul durch ein gemeinsames Modul gebildet sein.

Das Fehlerausgabemodul 212 ist insbesondere eingerichtet zumindest zum Bewirken eines Ausgebens einer Fehlermeldung durch die Ticketerfassungsvorrichtung 200, wenn ein Präsentationsfehler bestimmt wird. Wenn ein Bestimmen eines Präsentationsfehlers durch das Fehlerauswertemodul 210 kontinuierlich erfolgt, kann das Fehlerausgabemodul 212 vorzugsweise während der Zeitdauer des Vorliegens des Präsentationsfehlers kontinuierlich oder zyklisch ein Ausgeben der Fehlermeldung bewirken.

Vorzugsweise kann das Fehlerausgabemodul 212 eingerichtet sein zum Ansteuern der Anzeigeeinrichtung 206, derart, dass als Fehlermeldung ein optisches Signal ausgegeben wird. Beispielsweise kann sich der Hintergrund der mindestens einen Anzeigeeinrichtung 206 von einer ersten Farbe (z.B. weiß) zu einer weiteren Farbe (z.B. rot) ändern, ein spezifischer Text (z.B. "Einlesen des Tickets nicht möglich") ausgegeben werden oder ein Symbol dargestellt werden, welches dem Nutzer signalisiert, dass ein Einlesen des Tickets nicht möglich ist.

Alternativ oder zusätzlich kann durch das Fehlerausgabemodul 212 ein optionales Lautsprechermodul 226 angesteuert werden, derart, dass als Fehlermeldung ein akustisches Signal (z.B. ein bestimmter erster Ton oder eine bestimmte erste Tonfolge, eine Sprachmitteilung (z.B. "Ticketcode kann nicht eingelesen werden") oder dergleichen) ausgegeben wird.

Darüber hinaus kann alternativ oder zusätzlich das Fehlerausgabemodul 212 ein optionales Vibrationsmodul 222 ansteuern, derart, dass als Fehlermeldung ein haptisches Signal (z.B. ein bestimmtes erstes Vibrationssignal) ausgegeben wird. Ein Vibrationsmodul 222 kann insbesondere unmittelbar benachbart zu der kamerabasierten Erfassungseinrichtung 202 angeordnet sein oder darin integriert sein. Insbesondere bei einer Erfassungseinrichtung 202 in Form eines Auflagenscanners 202 kann hierdurch bewirkt werden, dass sich eine erzeugte Vibration von einer Auflagefläche des Auflagenscanners auf das Ticketmedium überträgt und damit durch den Nutzer wahrnehmbar ist.

Wie bereits beschrieben wurde, kann vorzugsweise die Anzeigeeinrichtung 206 eingerichtet sein zum Imitieren bzw. Nachahmen eines bestimmten Präsentationsfehlers. Ist beispielsweise die an dem Bildschirm bzw. Display des Ticketmediums eingestellte Helligkeitsstufe zu hell (bzw. zu dunkel), kann die Anzeigeeinrichtung 206 diese Helligkeitsstufe nachahmen bzw. imitieren. Insbesondere kann eine Verstellung der Helligkeitsstufe entsprechend des bestimmten Präsentationsfehlers bewirkt werden, beispielsweise veranlasst durch das Fehlerausgabemodul 212. In dem genannten Beispiel kann die Helligkeitsstufe entsprechend hell (bzw. dunkel) eingestellt werden. Ein Präsentationsfehler ist für den Nutzer leicht erkennbar.

Bevorzugt kann ein Lesebestätigungsmodul 214 vorgesehen sein. Das Lesebestätigungsmodul 214 kann zum Detektieren eines erfolgreichen bzw. fehlerfreien Extrahierens des Dateninhalts eingerichtet sein. Das Lesebestätigungsmodul 214 kann, bei einer entsprechenden Detektion, also wenn ein erfolgreiches Extrahieren des Dateninhalts des graphischen Ticketcodes aus den erfassten Bilddaten erfolgt ist, eingerichtet sein zum Bewirken eines Ausgebens einer Lesebestätigungsmeldung durch die Ticketerfassungsvorrichtung 200. Bei Varianten der Anmeldung kann alternativ oder zusätzlich das Lesebestätigungsmodul 214 aus einem Nicht-Vorhandensein eines Präsentationsfehlers schließen, dass ein Dateninhalt extrahiert wurde.

Vorzugsweise kann das Lesebestätigungsmodul 214 eingerichtet sein zum Ansteuern der Anzeigeeinrichtung 206, derart, dass als Lesebestätigungsmeldung ein optisches Signal ausgegeben wird. Beispielsweise kann sich der Hintergrund der Anzeigeeinrichtung 206 von einer ersten Farbe zu einer weiteren Farbe ändern (beispielsweise kann der Hintergrund dann grün sein, also beispielsweise von rot nach grün wechseln), ein spezifischer Text (z.B. "Einlesen des Tickets war erfolgreich") ausgegeben werden oder ein Symbol dargestellt werden, welches dem Nutzer signalisiert, dass ein Einlesen des Tickets erfolgreich war.

Alternativ oder zusätzlich kann durch das Lesebestätigungsmodul 214 das Lautsprechermodul 226 angesteuert werden, derart, dass als Lesebestätigungsmeldung ein akustisches Signal (z.B. ein bestimmter weiterer Ton, der sich von dem ersten Ton unterscheidet, oder eine bestimmte weitere Tonfolge, die sich von der ersten Tonfolge unterscheidet), eine Sprachmitteilung (z.B. "Ticketcode wurde erfolgreich eingelesen") oder dergleichen ausgegeben wird.

Darüber hinaus kann alternativ oder zusätzlich das Lesebestätigungsmodul 214 ein Vibrationsmodul 222 ansteuern, derart, dass als Lesebestätigungsmeldung ein haptisches Signal (z.B. ein bestimmtes weiteres Vibrationssignal, welches sich von dem ersten Vibrationssignal unterscheidet) ausgegeben wird.

Darüber hinaus kann optional ein Anweisungsmodul 216 vorgesehen sein. Das Anweisungsmodul 216 ist insbesondere eingerichtet zum Bestimmen mindestens einer ausgebbaren Nutzeranweisung zur Fehlerbeseitigung, basierend zumindest auf dem bestimmten Präsentationsfehler und einer Mehrzahl von für den mindestens einen Präsentationsfehler gespeicherten Nutzeranweisungen, beispielsweise gespeichert in einem (nicht dargestellten) Datenspeicher der Ticketerfassungsvorrichtung 200. Das Anweisungsmodul 216 kann eingerichtet sein zum Bewirken eines Ausgebens der bestimmten Anweisung. Hierzu kann das Anweisungsmodul 216 beispielsweise die Anzeigeeinrichtung 206 und/oder das Lautsprechermodul 226 ansteuern.

Vorteilhafterweise zeigt die Anzeigeeinrichtung 206 nur dann die augenblicklich von der kamerabasierten Erfassungseinrichtung 202 aufgenommenen Bilddaten als Bilder an, wenn sich tatsächlich in dem Erfassungsbereich 208 ein Ticketmedium (oder ein ähnlicher Gegenstand) befindet. Ansonsten kann die Anzeigeeinrichtung anderen Inhalt/Informationen anzeigen oder sich in einem Ruhemodus/Stromsparmodus befinden.

Um das Vorhandensein eines Ticketmediums in dem Erfassungsbereich 208 zu detektieren, insbesondere um einen Wechsel von einem Nicht-Vorhandensein eines Ticketmediums zu einem Vorhandensein eines Ticketmediums zu detektieren, kann vorzugsweise ein Ticketmediumdetektionsmodul 218 vorgesehen sein. Das Ticketmediumdetektionsmodul 218 kann eingerichtet sein zum Detektieren eines Vorhandenseins eines Ticketmediums in dem Erfassungsbereich 208 der kamerabasierten Erfassungseinrichtung 202, basierend auf den bereitgestellten und mindestens einem Umschaltkriterium.

Vorzugsweise kann das mindestens eine Umschaltkriterium ein Vorliegen eines Wechsels von einem Nicht-Vorhandensein eines Ticketmediums in dem Erfassungsbereich zu einem Vorhandensein eines Ticketmediums und/oder eines Wechsels von einem Vorhandensein eines Ticketmediums in dem Erfassungsbereich zu einem Nicht-Vorhandensein eines Ticketmediums definieren. Das mindestens eine Umschaltkriterium kann zum Beispiel einen Umfang einer Bildänderung aus Sicht der kamerabasierten Erfassungseinrichtung definieren, welche zumindest ein Indiz für einen zuvor genannten Wechsel ist.

Das Ticketmediumdetektionsmodul 218 kann zum Auswerten der erfassten Bilddaten zusammen mit dem mindestens einen Umschaltkriterium eingerichtet sein. Insbesondere kann das Ticketmediumdetektionsmodul 218 feststellen, ob die (augenblicklich) erfassten Bilddaten das mindestens eine Umschaltkriterium erfüllen. Ist dies der Fall, kann das Ticketmediumdetektionsmodul 218 ein Umschalten bewirken, also insbesondere ein Anzeigen der durch die kamerabasierte Erfassungseinrichtung 202 erfassten Bilddaten durch die Anzeigeeinrichtung 206 als Bilder bewirken (bei Detektion eines Wechsels von einem Nicht-Vorhandensein eines Ticketmediums zu einem Vorhandensein eines Ticketmediums) oder ein Anzeigen von anderen Informationen (bei Detektion eines Wechsels von einem Vorhandensein eines Ticketmediums zu einem Nicht-Vorhandensein eines Ticketmediums) bewirken und/oder ein Setzen in den Ruhemodus (bei Detektion eines Ablaufs der genannten Zeitdauer) bewirken.

Darüber hinaus umfasst die Ticketerfassungsvorrichtung 200 vorliegend eine optionale Nahfeldkommunikationsschnittstelle 224, vorzugsweise benachbart angeordnet zu der kamerabasierten Erfassungseinrichtung 202. Bevorzugt kann die Nahfeldkommunikationsschnittstelle 224 eine NFC-basierte Schnittstelle 224 sein. Es versteht sich, dass bei anderen Varianten auch andere drahtlose Übertragungstechnologien eingesetzt werden können.

Insbesondere bei einer Erfassungseinrichtung 202 in Form eines Auflagenscanners 202 kann durch die benachbarte Anordnung einer NFC-basierten Schnittstelle bewirkt werden, dass eine (sichere) Kommunikationsverbindung mit einem auf dem Auflagenscanner 202 positionierten Ticketmedium (z.B. ein Smartphone) hergestellt werden kann. Das Ticketmedium kann hierfür insbesondere ebenfalls eine NFC-Schnittstelle aufweisen.

Über die Kommunikationsverbindung können Daten insbesondere an das Ticketmedium übertragen werden. Die Nahfeldkommunikationsschnittstelle 224 ist insbesondere eingerichtet zum Aussenden einer Fehlermeldungsnachricht an das Ticketmedium in Form eines mobilen Endgeräts.

Die Fehlermeldungsnachricht kann erste Instruktionen enthalten, die bei einer Ausführung durch einen Prozessor des mobilen Endgeräts das mobile Endgerät veranlassen, mindestens ein erstes Hinweissignal auszugeben, insbesondere ein erstes Vibrationssignal. Mit anderen Worten kann das mobile Endgerät veranlasst werden, ein erstes Vibrationssignal auszugeben, welches insbesondere auf das Vorliegen eines Präsentationsfehlers hindeutet. Vorzugsweise kann dies durch eine auf dem mobilen Endgerät installierte Zugangsanwendung gesteuert werden.

Es versteht sich, dass bei anderen Varianten der Anmeldung das erste Hinweissignal alternativ oder zusätzlich ein optisches Signal oder ein akustisches Signal sein kann.

Vorzugsweise zusätzlich kann die Nahfeldkommunikationsschnittstelle 224 eingerichtet sein zum Aussenden einer Lesebestätigungsmeldungsnachricht an das Ticketmedium in Form eines mobilen Endgeräts.

Die Lesebestätigungsmeldungsnachricht kann zweite Instruktionen enthalten, die bei einer Ausführung durch einen Prozessor des mobilen Endgeräts das mobile Endgerät veranlassen, mindestens ein zweites Hinweissignal auszugeben, insbesondere ein zweites Vibrationssignal. Insbesondere kann sich das zweite Hinweissignal von dem ersten Hinweissignal unterscheiden. Mit anderen Worten kann das mobile Endgerät veranlasst werden, ein zweites Vibrationssignal auszugeben, welches insbesondere auf das Vorliegen eines erfolgreichen Auslesens des Dateninhalts hindeutet.

Vorzugsweise kann dies durch eine auf dem mobilen Endgerät installierte Zugangsanwendung gesteuert werden.

Es versteht sich, dass bei anderen Varianten der Anmeldung das zweite Hinweissignal alternativ oder zusätzlich ein optisches Signal oder ein akustisches Signal sein kann.

Zudem kann die Ticketerfassungsvorrichtung 200 mindestens ein Fernkommunikationsmodul 220 umfassen. Das Fernkommunikationsmodul 220 kann eingerichtet sein zum Austauschen von Daten mit einem entfernt angeordneten (nicht dargestellten) Backendsystem (beispielsweise gebildet durch mindestens einen Server oder einem sogenannten Cloud-Server). Beispielsweise kann zur Durchführung einer Authentifizierung eine aus einem Ticketcode extrahierte Zugangsberechtigung an das Backendsystem übertragen werden. Darüber hinaus kann das Ergebnis einer Authentifizierungsprüfung durch das Backendsystem an die Ticketerfassungsvorrichtung 200 gesendet werden. Es versteht sich, dass weitere Daten zwischen Backendsystem und Ticketerfassungsvorrichtung 200 ausgetauscht werden können.

Das Ergebnis der Authentifizierungsprüfung kann der Freigabeeinrichtung 228 bereitgestellt werden. Die Freigabeeinrichtung 228 ist insbesondere eingerichtet zum Erzeugen eines Freigabesignals, basierend auf dem ausgewerteten Dateninhalt des graphischen Ticketcodes, also beispielsweise dem bereitgestellten Ergebnis der Authentifizierungsprüfung.

Vorzugsweise kann bei dieser Ausführungsform die anmeldungsgemäße Ticketerfassungsvorrichtung 200 in einem (nicht dargestellten) Gate integriert sein. Ergibt die Auswertung eine Berechtigung des Nutzers zum Passieren des Gates, kann das Freigabesignal erzeugt werden. Insbesondere kann ein Aktor des Gates mit dem erzeugten Signal angesteuert werden, um ein Sperrelement zu verstellen, so dass der Nutzer das Gate passieren kann. Ergibt die Auswertung eine Nicht-Berechtigung des Nutzers zum Passieren des Gates, kann das Gate gesperrt bleiben.

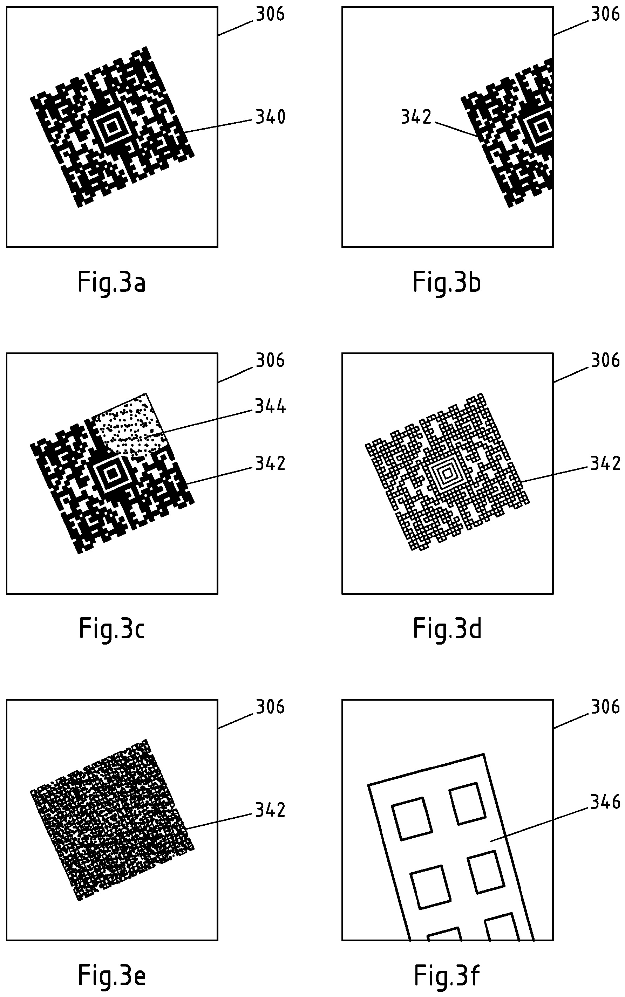

Die Figuren 3a-f zeigen schematische Ansichten von beispielhaften typischen Bildern, die von der kamerabasierten Erfassungseinrichtung 102, 202 einer fest montierten Ticketerfassungsvorrichtung erfasst werden können und die als Bildschirminhalte einer Anzeigeeinrichtung 306 anmeldungsgemäß wiedergegeben werden. Die Ticketerfassungsvorrichtung kann beispielsweise entsprechend der Figur 1 und/oder der Figur 2 gebildet sein.

In der Figur 3a ist der wiedergegebene Ticketcode 340 bzw. dessen Dateninhalt einlesbar bzw. extrahierbar. Der Ticketcode 340 ist insbesondere gut zur kamerabasierten Erfassungseinrichtung ausgerichtet und weist eine ausreichende Qualität auf. Ein fehlerfreies Durchführen des Einlesevorgangs ist somit möglich.

In der Figur 3b ist der Fall dargestellt, dass der Ticketcode 342 nicht vollständig durch die kamerabasierte Erfassungseinrichtung erfasst wird, weil beispielsweise das Ticketmedium nur teilweise in den Erfassungsbereich der kamerabasierten Erfassungseinrichtung gehalten wird und/oder auf dem Display des Ticketmediums der Ticketcode nur teilweise dargestellt wird.

Es liegt also insbesondere als Präsentationsfehler ein Unvollständigkeitsfehler vor. Wie bereits beschrieben wurde, kann ein solcher Fehler mit Hilfe mindestens eines vordefinierten Fehlerkriteriums bestimmt werden.

Durch die dargestellte Wiedergabe der erfassten Bilddaten als Bilder durch die Anzeigeeinrichtung 306 kann der Nutzer zielgerichtet das Ticketmedium verschieben (vorliegend nach links) und/oder ein Anzeigen des Ticketcodes auf dem Display des Ticketmediums anpassen. Anschließend kann der Dateninhalt des Ticketcodes extrahiert werden.

Bei dem Beispiel der Figur 3c trifft auf einen Teilbereich 344 des auf einem Display eines Ticketmediums angezeigten Ticketcodes 342 Fremdlicht, beispielsweise durch eine (ungewollte Reflexion). Dies ist durch die Widergabe der erfassten Bilddaten als Bilder unmittelbar für den Nutzer ersichtlich. Es liegt insbesondere als Präsentationsfehler ein Fremdlichtfehler vor.

Durch die Wiedergabe der erfassten Bilddaten als Bilder durch die Anzeigeeinrichtung 306 kann der Nutzer zielgerichtet das Ticketmedium bewegen, insbesondere derart kippen, dass (nahezu) kein Fremdlicht auf das Ticketmedium bzw. das Display des Ticketmediums mehr trifft. Anschließend kann der Dateninhalt des Ticketmediums fehlerfrei extrahiert werden.

In dem Beispiel der Figur 3d wird ein Helligkeitsfehler und/oder Kontrastfehler angedeutet. Dies meint insbesondere, dass die eingestellte Helligkeitsstufe und/oder Kontraststufe ein Einlesen verhindert. Auch ein derartiger Präsentationsfehler wird durch die Wiedergabe der augenblicklich erfassten Bilddaten als Bilder unmittelbar für den Nutzer ersichtlich.

Der Nutzer kann zielgerichtete Gegenmaßnahmen ergreifen, insbesondere die an dem mobilen Endgerät eingestellte Kontraststufe und/oder die Helligkeitsstufe verändern. Anschließend kann der Dateninhalt des Ticketcodes fehlerfrei extrahiert werden.

In dem Beispiel der Figur 3e wird ein Unschärfefehler angedeutet. Auch dieser ist für den Nutzer aufgrund der Wiedergaben der augenblicklich durch die kamerabasierte Erfassungseinrichtung aufgenommenen Bilddaten als Bilder unmittelbar ersichtlich. Der Nutzer kann zur Behebung des genannten Präsentationsfehlers das Ticketmedium bewegen, insbesondere näher an die Erfassungseinrichtung heran bewegen oder weiter von dieser wegbewegen, bis eine ausreichend scharfe Darstellung des Ticketcodes vorliegt und insbesondere durch die Anzeigeeinrichtung 306 angezeigt wird. Anschließend kann der Dateninhalt des Ticketcodes fehlerfrei extrahiert werden.

Schließlich ist in der Figur 3f beispielhaft ein weiterer Unvollständigkeitsfehler dargestellt. In diesem Fall zeigt der Bildschirm des mobilen Endgeräts keinen Ticketcode (mehr) an, beispielsweise aufgrund eines versehentlichen App-Wechsels. Auch hier ist für den Nutzer der Präsentationsfehler unmittelbar durch die wiedergegeben erfassten Bilddaten als Bilder ersichtlich, so dass dieser insbesondere zeitnah den Fehler beheben kann, z.B. durch ein Aufrufen der richtigen Anwendung.

Ein weiterer möglicher Präsentationsfehler, der nicht in Figur 3 dargestellt ist, ist das Nicht-Erfüllen eines Größenkriteriums: Das von der kamerabasierten Erfassungseinrichtung erfasste Bild kann zu groß sein, also das Ticket wird zu nah an den Leser gehalten, oder das erfasste Bild kann zu klein sein, also das Ticket wird zu weit entfernt von der kamerabasierten Erfassungseinrichtung Leser gehalten, und der optische Code kann nicht aufgelöst werden.

Ein weiterer möglicher Präsentationsfehler, der nicht in Figur 3 dargestellt ist, ist das Verkippen des Tickets beim Einlesen. Dadurch, dass der Nutzer das Ticket verkippt vor die kamerabasierte Erfassungseinrichtung hält, wird der optische Code perspektivisch verzerrt erfasst, und die erfassten Bilddaten können nicht ausgewertet werden,

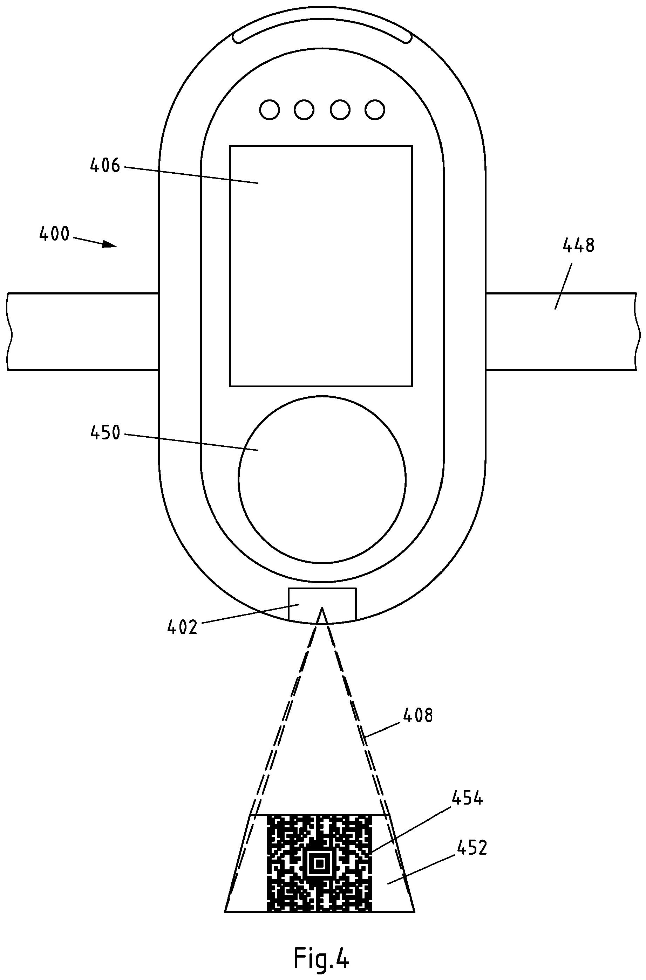

Die Figur 4 zeigt eine schematische Ansicht eines weiteren Ausführungsbeispiels einer fest montierten Ticketerfassungsvorrichtung 400 gemäß der vorliegenden Anmeldung. Zur Vermeidung von Wiederholungen werden nachfolgend im Wesentlichen nur die Unterschiede zu den vorherigen Ausführungsbeispielen beschrieben, und ansonsten wird auf die vorherigen Ausführungen verwiesen. Zudem wurde zu Gunsten einer besseren Übersicht auf eine Darstellung einer Auswerteeinrichtung verzichtet. Insbesondere ist in der Figur 4 eine beispielhafte äußere Erscheinungsform einer anmeldungsgemäßen Ticketerfassungsvorrichtung 400 dargestellt.

Wie zu erkennen ist, ist an einer Außenseite des Gehäuses der Ticketerfassungsvorrichtung 400 eine optische Anzeigeeinrichtung 406 angeordnet. An der Unterseite des Gehäuses (bezogen auf den montierten Zustand der Ticketerfassungsvorrichtung 400) ist vorliegend die kamerabasierte Erfassungseinrichtung 402 positioniert.

Beispielhaft ist in dem Erfassungsbereich 408 ferner ein Ticketmedium 452 mit einem Ticketcode 454 dargestellt. Optional kann die Ticketerfassungsvorrichtung 400 über mindestens eine weitere Kommunikationsschnittstelle verfügen, wie eine NFC-Schnittstelle oder dergleichen.

In dem vorliegenden Ausführungsbeispiel ist die Ticketerfassungsvorrichtung 400 fest an einem Träger 448 (z.B. eine Haltestange eines Personentransportfahrzeugs) montiert. Hierfür können geeignete Befestigungsmittel an dem Gehäuse der Ticketerfassungsvorrichtung 400 vorgesehen sein.

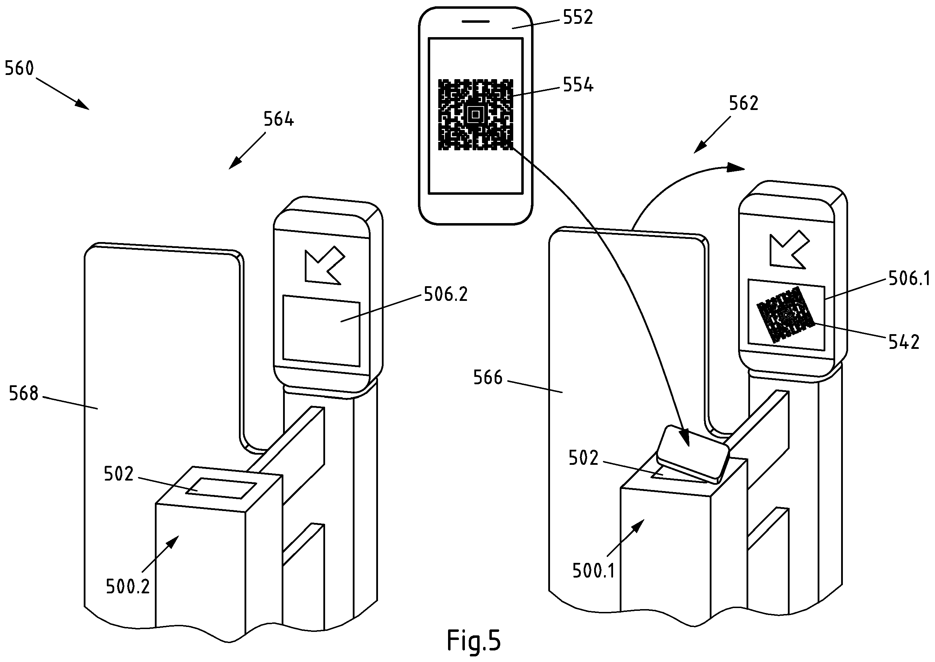

Die Figur 5 zeigt eine schematische Ansicht eines Ausführungsbeispiels eines Zugangskontrollsystems 560 gemäß der vorliegenden Anmeldung. Zur Vermeidung von Wiederholungen werden nachfolgend im Wesentlichen nur die Unterschiede zu den vorherigen Ausführungsbeispielen beschrieben, und ansonsten wird auf die vorherigen Ausführungen verwiesen. Zudem wurde zu Gunsten einer besseren Übersicht auf eine Darstellung einer Auswerteeinrichtung verzichtet.

Das dargestellte Zugangskontrollsystem 560 kann insbesondere in einem Personentransportsystem verwendet werden. Insbesondere ist vorliegend beispielhaft ein Gatearray mit zwei Gates 562, 564 jeweils in Form von Durchgangssperren 562, 564 dargestellt. Jedes Gate 562, 564 kann mindestens ein verfahrbares Sperrelement 566, 568 umfassen. Das Zugangskontrollsystem 560 kann das Gatearray bzw. das mindestens eine Gate 562, 564 umfassen.

Vorzugsweise ist vorliegend in jedem Gate 562, 564 jeweils eine fest montierte Ticketerfassungsvorrichtung 500.1, 500.2 angeordnet, insbesondere integriert. Die Gates 562, 564 können wiederum fest auf einem Boden montiert sein.

Eine Ticketerfassungsvorrichtung 500.1, 500.2 kann insbesondere gemäß der Figur 1 und/oder der Figur 2 gebildet sein.

Die kamerabasierte Erfassungseinrichtung 502 ist insbesondere ein Auflagenscanner 502. Ein Nutzer kann auf seinem mobilen Endgerät 552 den einzulesenden Ticketcode 554 zur Anzeige bringen. Dann kann der Nutzer das mobile Endgerät 552 auf den Auflagescanner 502 auflegen.

Im Stand der Technik würde der Nutzer nun nicht erkennen können, was das mobile Endgerät 552 in dem aufgelegten Zustand anzeigt. Anmeldungsgemäß werden die erfassten Bilddaten in Echtzeit auf der Anzeigeeinrichtung 506 als Bilder angezeigt bzw. wiedergegeben. Vorliegend wird beispielhaft der Ticketcode 542 ohne einen Präsentationsfehler angezeigt.

Das Zugangskontrollsystem 560 umfasst mindestens eine (vorliegend nicht dargestellte) Auswerteeinrichtung. Hierbei kann die mindestens eine Auswerteeinrichtung die (lokale) Auswerteeinrichtung der zuvor beschriebenen Ticketerfassungsvorrichtung 500.1, 500.2 oder eine weitere Auswerteeinrichtung eines (nicht dargestellten) Backendsystems sein.

Die Auswerteeinrichtung kann eingerichtet sein zum Prüfen des Dateninhalts, insbesondere einer extrahierten Zugangsberechtigung bzw. Zugangscodes. Insbesondere kann die Zugangsberechtigung in herkömmlicherweise durch die genannte Auswerteeinrichtung überprüft werden.

Nach einer Überprüfung des extrahierten Dateninhalts, insbesondere der extrahierten Zugangsberechtigung, kann ein Sperrelement 566 freigegeben, insbesondere geöffnet werden. Wie beschrieben wurde, kann beispielsweise eine Freigabeeinrichtung einen Aktor des Gates 562 abhängig von dem Überprüfungsergebnis mit einem Freigabesignal ansteuern, um das Sperrelement 566 zu verstellen, so dass der Nutzer das Gate 562 passieren kann.

Ergibt die Auswertung eine Nicht-Berechtigung des Nutzers zum Passieren des Gates 562, kann das Gate 562 gesperrt bleiben.

Das Zugangskontrollsystem 560 kann optional das Backendsystem und/oder mindestens ein Ticketmedium 552 umfassen.

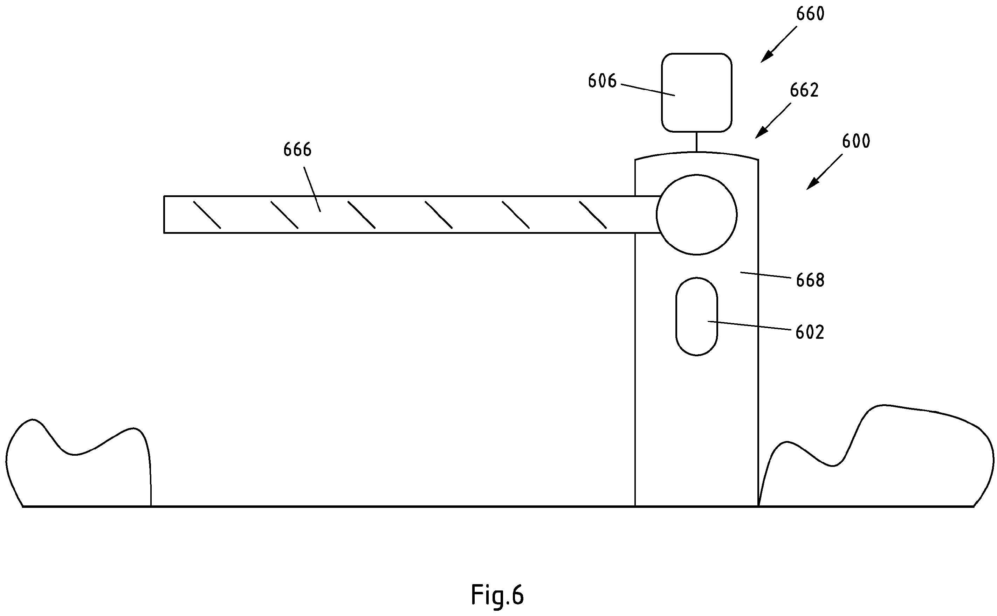

Die Figur 6 zeigt eine schematische Ansicht eines weiteren Ausführungsbeispiels eines Zugangskontrollsystems 660 gemäß der vorliegenden Anmeldung. Zur Vermeidung von Wiederholungen werden nachfolgend im Wesentlichen nur die Unterschiede zu den vorherigen Ausführungsbeispielen beschrieben, und ansonsten wird auf die vorherigen Ausführungen verwiesen. Zudem wurde zu Gunsten einer besseren Übersicht auf eine Darstellung einer Auswerteeinrichtung verzichtet.

Das dargestellte Zugangskontrollsystem 660 kann insbesondere in einem Parksystem verwendet werden. Beispielsweise kann das Gate 662 an einer Einfahrt und/oder Ausfahrt eines Parkbereichs angeordnet sein, wie ein Parkplatz, Parkhaus oder dergleichen. Das dargestellte Zugangskontrollsystem 660 kann insbesondere auch als Zufahrtssystem bezeichnet werden.

Das mindestens eine Gate 662 ist insbesondere eine Durchfahrtssperre 662 in Form einer Schrankenanlage 662. Die Schrankenanlage 662 ist vorliegend durch eine Bediensäule 668 und ein Sperrelement 666 in Form eines beweglichen Schrankenbaums 666 gebildet.

Vorzugsweise ist vorliegend in der Schrankenanlage 662 eine fest montierte Ticketerfassungsvorrichtung 600 angeordnet, insbesondere integriert. Die Schrankenanlage kann wiederum fest auf dem Boden montiert sein. Eine Ticketerfassungsvorrichtung 600 kann insbesondere gemäß der Figur 1 und/oder der Figur 2 gebildet sein.

Insbesondere sind in der Figur 6 eine kamerabasierte Erfassungseinrichtung 602 und eine optische Anzeigeeinrichtung 606 dargestellt.

Die kamerabasierte Erfassungseinrichtung 602 ist beispielsweise ein Auflagenscanner 602. Ein Nutzer kann auf seinem mobilen Endgerät den einzulesenden Ticketcode, der ihn zum Passieren des Gates 662 berechtigt, mit Hilfe einer installierten Zugangsanwendung zur Anzeige bringen. Dann kann der Nutzer das mobile Endgerät auf den Auflagescanner 602 auflegen.

Anmeldungsgemäß werden die erfassten Bilddaten in Echtzeit auf der Anzeigeeinrichtung 606 als Bilder angezeigt bzw. wiedergegeben.

Das Zugangskontrollsystem 660 umfasst mindestens eine (vorliegend nicht dargestellte) Auswerteeinrichtung. Hierbei kann die mindestens eine Auswerteeinrichtung die (lokale) Auswerteeinrichtung der zuvor beschriebenen Ticketerfassungsvorrichtung 600 oder eine weitere Auswerteeinrichtung eines (nicht dargestellten) Backendsystems sein.

Die Auswerteeinrichtung kann eingerichtet sein zum Prüfen des Dateninhalts, insbesondere einer extrahierten Zugangsberechtigung bzw. Zugangscodes. Insbesondere kann die Zugangsberechtigung in herkömmlicherweise durch die genannte Auswerteeinrichtung überprüft werden.

Nach einer Überprüfung des extrahierten Dateninhalts, insbesondere der extrahierten Zugangsberechtigung, kann das Sperrelement 666 freigegeben, insbesondere geöffnet werden. Wie beschrieben wurde, kann beispielsweise eine Freigabeeinrichtung einen Aktor des Gates 662 abhängig von dem Überprüfungsergebnis mit einem Freigabesignal ansteuern, um das Sperrelement 666 zu verstellen, so dass der Nutzer das Gate 662 mit seinem Fahrzeug passieren kann.

Ergibt die Auswertung eine Nicht-Berechtigung des Nutzers zum Passieren des Gates 662, kann das Gate 662 gesperrt bleiben.

Das Zugangskontrollsystem 660 kann optional das Backendsystem und/oder mindestens ein Ticketmedium umfassen.

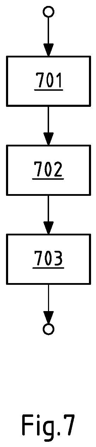

Die Figur 7 zeigt ein Diagramm eines Ausführungsbeispiels eines Verfahrens gemäß der vorliegenden Anmeldung, insbesondere zum Betreiben einer fest montierten Ticketerfassungsvorrichtung nach Figur 1 und/oder Figur 2 oder zum Betrieben eines Zugangskontrollsystems, insbesondere gemäß den Figuren 5 oder 6.

In einem Schritt 701 erfolgt ein Erfassen, durch mindestens eine kamerabasierte Erfassungseinrichtung, von Bildern eines graphischen Ticketcodes eines Ticketmediums im Erfassungsbereich der kamerabasierten Erfassungseinrichtung und ein Erstellen von erfassten Bilddaten aus den erfassten Bildern, wie bereits beschrieben wurde. Insbesondere wird ein in den Erfassungsbereich gehaltenes Ticketmedium mit optischem Ticketcode erfasst bzw. aufgenommen.

In einem Schritt 702, der im Wesentlichen parallel zu Schritt 701 durchgeführt werden kann, erfolgt ein Extrahieren, durch mindestens eine mit der kamerabasierten Erfassungseinrichtung kommunikativ gekoppelte Auswerteeinrichtung, des graphischen Ticketcodes der erfassten Bilddaten, wie bereits beschrieben wurde. Insbesondere wird aus dem in den erfassten Bilddaten enthaltenen und aufgenommenen Ticketcode der Dateninhalt extrahiert.

In einem Schritt 703, der im Wesentlichen parallel zu Schritt 701 und 702 durchgeführt werden kann, erfolgt ein Anzeigen, durch mindestens eine mit der kamerabasierten Erfassungseinrichtung kommunikativ gekoppelte optische Anzeigeeinrichtung, der durch die kamerabasierte Erfassungseinrichtung erfassten Bilddaten als Bilder, wie bereits beschrieben wurde.

In ähnlicher Weise kann ein Einlesevorgang bei Rabattcodes oder einer Kundenkarte durch eine Kassiervorrichtung erfolgen.

Zusammenfassend werden nachfolgend (erneut) beispielhafte Probleme des Stands der Technik bei einem Lesevorgang von z.B. einem Smartphonebildschirm genannt:
1. Während des Lesevorgangs muss ein Ticketcode auf dem Display des Ticketmediums angezeigt werden. Ein versehentlicher App-Wechsel, Ansprechen des Lagesensors, versehentliches Scrollen usw. können den Barcode verschwinden lassen. Dies wird je nach Einbaulage und Technologie eines Stand der Technik Barcodelesers bzw. der kamerabasierten Erfassungseinrichtung vom Nutzer nicht bemerkt (z.B. bei Auflagescannern vergleichbar dem Flughafen-Boarding).
2. Der Ticketcode muss an die "richtige Stelle" der Ticketerfassungsvorrichtung gehalten werden, so dass der Barcodeleser der Ticketerfassungsvorrichtung den gesamten Ticketcode vom Bildschirm des Ticketmediums erfassen kann. Für das Einscannen von (papierbasierten) Ticketcodes mittels eines Handscanners gibt es im Stand der Technik zur Unterstützung sogenannte "Aimer", die auf den Bereich, in dem der Handscanner liest, Lichtprojektionen abbilden. Diese "Aimer" sind jedoch auf dem aktiv leuchtenden Display eines Smartphones meist nicht sichtbar.
3. Die Entfernung zwischen Ticketcode und Barcodeleser muss zur eingesetzten Technik passen, damit das erfasste Bild ausreichende Schärfe aufweist. Dies ist insbesondere bei Stand der Technik Scannersystemen kritisch, bei denen das Ticketmedium mit dem einzulesenden Ticketcode auf Abstand gehalten werden muss. Auflagescanner sind hier weitgehend unproblematisch, sind aufgrund ihrer Baugröße jedoch nicht für alle der Ticketerfassungsvorrichtung einsetzbar (z.B. nicht für Validatoren).
4. Die Bewegungsgeschwindigkeit des Ticketmediums, von dessen Bildschirm der Ticketcode eingelesen werden soll, darf für ein verarbeitbares Bild ausreichender Schärfe nicht zu groß sein. Hier ist das Nutzerverhalten beim Stand der Technik der Ticketerfassungsvorrichtungen oft eher kontraproduktiv: Bei einem nicht unmittelbar positiven Leseergebnis wird das Ticketmedium hin und her bewegt, was zu größerer Unschärfe und somit "erst recht" zu keinem erfolgreichen Lesevorgang führt.
5. Helligkeit und Kontrast des auf dem Bildschirm des Nutzerendgeräts dargestellten Barcodes müssen ausreichend sein. Nutzer reduzieren jedoch oft die Bildschirmhelligkeit zur Verlängerung der Akkulaufzeit.
6. Es dürfen keine Lichtreflexionen auf dem Bildschirm des Nutzerendgeräts auftreten, da hierdurch ggf. Teilbereiche des Barcodes für den Barcodeleser nicht mehr sichtbar sind. Dies kann durch die Einbausituation des Barcodescanners in der Ticketerfassungsvorrichtung beeinflusst werden. Design und Größe der Ticketerfassungsvorrichtung fordern hier jedoch oft Kompromisse.

## Patentansprüche

1. Fest montierte Ticketerfassungsvorrichtung (100, 200, 400, 500, 600) für ein Zugangskontrollsystem (560, 660), umfassend:
- mindestens eine kamerabasierte Erfassungseinrichtung (102, 202, 402, 502, 602), eingerichtet zum Erfassen von Bildern eines graphischen Ticketcodes eines Ticketmediums (452, 552) in einem Erfassungsbereich (108, 208, 408) der kamerabasierten Erfassungseinrichtung (102, 202, 402, 502, 602) und zum Erstellen von erfassten Bilddaten aus den erfassten Bildern und
- mindestens eine mit der kamerabasierten Erfassungseinrichtung (102, 202, 402, 502, 602) kommunikativ gekoppelte Auswerteeinrichtung (104, 204), eingerichtet zumindest zum Erhalten der erfassten Bilddaten von der kamerabasierten Erfassungseinrichtung (102, 202, 402, 502, 602) und zum Extrahieren eines Dateninhalts des graphischen Ticketcodes aus den erhaltenen erfassten Bilddaten,
wobei die Ticketerfassungsvorrichtung (100, 200, 400, 500, 600) umfasst:
- mindestens eine mit der kamerabasierten Erfassungseinrichtung (102, 202, 402, 502, 602) kommunikativ gekoppelte optische Anzeigeeinrichtung (106, 206, 406, 506, 606), eingerichtet zum Erhalten der erfassten Bilddaten von der kamerabasierten Erfassungseinrichtung (102, 202, 402, 502, 602) und zum Anzeigen der durch die kamerabasierte Erfassungseinrichtung (102, 202, 402, 502, 602) augenblicklich erfassten Bilddaten als Bilder,
- mindestens ein mit der kamerabasierten Erfassungseinrichtung (102, 202, 402, 502, 602) kommunikativ gekoppeltes Fehlerauswertemodul (210), eingerichtet zum Bestimmen eines Präsentationsfehlers, basierend auf den erfassten Bilddaten des Ticketmediums (452, 552) und mindestens einem Fehlerkriterium,
- wobei das mindestens eine Fehlerkriterium ausgewählt ist aus der Gruppe, bestehend aus:
- Ticketcode-Vollständigkeitskriterium,
- Größenkriterium,
- Fremdlichtkriterium,
- Helligkeitskriterium,
- Kontrastkriterium,
- Verkippungskriterium, und
- Schärfekriterium,
- wobei für zumindest zwei unterschiedliche Präsentationsfehler jeweils ein Fehlerkriterium vordefiniert ist, und
- mindestens ein mit dem Fehlerauswertemodul (210) kommunikativ gekoppeltes Fehlerausgabemodul (212), eingerichtet zumindest zum Bewirken eines Ausgebens einer Fehlermeldung durch die Ticketerfassungsvorrichtung (100, 200, 400, 500, 600), wenn ein Präsentationsfehler bestimmt wird, und/oder
- mindestens ein mit der Auswerteeinrichtung (104, 204) kommunikativ gekoppeltes Lesebestätigungsmodul (214), eingerichtet zumindest zum Bewirken eines Ausgebens einer Lesebestätigungsmeldung durch die Ticketerfassungsvorrichtung (100, 200, 400, 500, 600), wenn ein erfolgreiches Extrahieren des Dateninhalts des graphischen Ticketcodes aus den erfassten Bilddaten erfolgt ist.

2. Ticketerfassungsvorrichtung (100, 200, 400, 500, 600) nach Anspruch 1,
**dadurch gekennzeichnet, dass**
- die Ticketerfassungsvorrichtung (100, 200, 400, 500, 600) eingerichtet ist zum Ausgeben eines optischen Signals, eines akustischen Signals und/oder eines haptischen Signals, basierend auf einer erhaltenen Fehlermeldung und/oder einer erhaltenen Lesebestätigungsmeldung.

3. Ticketerfassungsvorrichtung (100, 200, 400, 500, 600) nach Anspruch 1 oder 2, **dadurch gekennzeichnet, dass**
- die optische Anzeigeeinrichtung (106, 206, 406, 506, 606) eingerichtet ist zum Imitieren eines bestimmten Präsentationsfehlers, basierend auf einer erhaltenen Fehlermeldung, wobei der Bildschirminhalt der Anzeigeeinrichtung mindestens eine Eigenschaft imitiert, die einer Eigenschaft des augenblicklich erfassten Bildes des Ticketmediums entspricht,
- wobei das Imitieren eines bestimmten Präsentationsfehlers insbesondere eine Änderung der Helligkeit der optischen Anzeigeeinrichtung (106, 206, 406, 506, 606) umfasst, basierend auf einem als Präsentationsfehler bestimmten Helligkeitsfehler.

4. Ticketerfassungsvorrichtung (100, 200, 400, 500, 600) nach einem der Ansprüche 1 bis 3, **dadurch gekennzeichnet, dass**
- die Ticketerfassungsvorrichtung (100, 200, 400, 500, 600) mindestens ein mit dem Fehlerauswertemodul (210) kommunikativ gekoppeltes Anweisungsmodul (216) umfasst, eingerichtet zum Bestimmen mindestens einer ausgebbaren Nutzeranweisung zur Fehlerbeseitigung, basierend zumindest auf dem bestimmten Präsentationsfehler und einer Mehrzahl von für den mindestens einen Präsentationsfehler gespeicherten Nutzeranweisungen, und
- das Anweisungsmodul (216) eingerichtet ist zum Bewirken eines Ausgebens der bestimmten Nutzeranweisung.

5. Ticketerfassungsvorrichtung (100, 200, 400, 500, 600) nach einem der Ansprüche 1 bis 4, **dadurch gekennzeichnet, dass**
- die Ticketerfassungsvorrichtung (100, 200, 400, 500, 600) mindestens eine mit dem Fehlerausgabemodul (212) kommunikativ gekoppelte Nahfeldkommunikationsschnittstelle (224) umfasst, eingerichtet zum Aussenden einer Fehlermeldungsnachricht an das Ticketmedium (452, 552) in Form eines mobilen Endgeräts (452, 552),
- wobei die Fehlermeldungsnachricht erste Instruktionen enthält, die bei einer Ausführung durch einen Prozessor des mobilen Endgeräts (452, 552) das mobile Endgerät (452, 552) veranlassen, mindestens ein erstes Hinweissignal auszugeben, insbesondere ein erstes Vibrationssignal.

6. Ticketerfassungsvorrichtung (100, 200, 400, 500, 600) nach einem der Ansprüche 1 bis 5, **dadurch gekennzeichnet, dass**
- die Ticketerfassungsvorrichtung (100, 200, 400, 500, 600) mindestens eine mit dem Fehlerausgabemodul (212) kommunikativ gekoppelte Nahfeldkommunikationsschnittstelle (224) umfasst, eingerichtet zum Aussenden einer Lesebestätigungsmeldungsnachricht an das Ticketmedium (452, 552) in Form eines mobilen Endgeräts (452, 552),
- wobei die Lesebestätigungsmeldungsnachricht zweite Instruktionen enthält, die bei einer Ausführung durch einen Prozessor des mobilen Endgeräts (452, 552) das mobile Endgerät (452, 552) veranlassen, mindestens ein zweites Hinweissignal auszugeben, insbesondere ein zweites Vibrationssignal,

7. Ticketerfassungsvorrichtung (100, 200, 400, 500, 600) nach den Ansprüchen 5 und 6, **dadurch gekennzeichnet, dass** sich das erste Hinweissignal von dem zweiten Hinweissignal unterscheidet.

8. Ticketerfassungsvorrichtung (100, 200, 400, 500, 600) nach einem der Ansprüche 1 bis 7, **dadurch gekennzeichnet, dass**
- die Ticketerfassungsvorrichtung (100, 200, 400, 500, 600) mindestens ein mit der kamerabasierten Erfassungseinrichtung (102, 202, 402, 502, 602) gekoppeltes Ticketmediumdetektionsmodul (218) umfasst, eingerichtet zum Detektieren eines Vorhandenseins eines Ticketmediums (452, 552) in dem Erfassungsbereich (108, 208, 408) der kamerabasierten Erfassungseinrichtung (102, 202, 402, 502, 602),
- wobei das Ticketmediumdetektionsmodul (218) eingerichtet ist zum Bewirken eines Anzeigens der durch die kamerabasierte Erfassungseinrichtung (102, 202, 402, 502, 602) erfassten Bilddaten als Bilder nur bei Detektion des Vorhandenseins des Ticketmediums (452, 552) in dem Erfassungsbereich (108, 208, 408) der kamerabasierten Erfassungseinrichtung (102, 202, 402, 502, 602).

9. Ticketerfassungsvorrichtung (100, 200, 400, 500, 600) nach einem der vorherigen Ansprüche, **dadurch gekennzeichnet, dass**
- die Ticketerfassungsvorrichtung (100, 200, 400, 500, 600) mindestens eine Freigabeeinrichtung (228) umfasst, eingerichtet zum Erzeugen eines Freigabesignals, basierend auf einem ausgewerteten Dateninhalt des graphischen Ticketcodes, wenn die Auswertung eine Berechtigung des Nutzers zum Passieren eines Gates ergibt.

10. Verfahren zum Betreiben einer fest montierten Ticketerfassungsvorrichtung (100, 200, 400, 500, 600), umfassend:
- Erfassen, durch mindestens eine kamerabasierte Erfassungseinrichtung (102, 202, 402, 502, 602), von Bildern eines graphischen Ticketcodes eines Ticketmediums (452, 552) in einem Erfassungsbereich (108, 208, 408) der kamerabasierten Erfassungseinrichtung (102, 202, 402, 502, 602),
- Erstellen, durch die mindestens eine kamerabasierte Erfassungseinrichtung (102, 202, 402, 502, 602), von erfassten Bilddaten aus den erfassten Bildern und
- Extrahieren, durch mindestens eine mit der kamerabasierten Erfassungseinrichtung (102, 202, 402, 502, 602) kommunikativ gekoppelte Auswerteeinrichtung (104, 204), des graphischen Ticketcodes der erfassten Bilddaten,
wobei das Verfahren ferner umfasst:
- Anzeigen, durch mindestens eine mit der kamerabasierten Erfassungseinrichtung (102, 202, 402, 502, 602) kommunikativ gekoppelte optische Anzeigeeinrichtung (106, 206, 406, 506, 606), der durch die kamerabasierte Erfassungseinrichtung (102, 202, 402, 502, 602) augenblicklich erfassten Bilddaten als Bilder,
- Bestimmen, durch mindestens ein mit der kamerabasierten Erfassungseinrichtung (102, 202, 402, 502, 602) kommunikativ gekoppeltes Fehlerauswertemodul (210), eines Präsentationsfehlers, basierend auf den erfassten Bilddaten des Ticketmediums (452, 552) und mindestens einem Fehlerkriterium,
- wobei das mindestens eine Fehlerkriterium ausgewählt ist aus der Gruppe, bestehend aus:
- Ticketcode-Vollständigkeitskriterium,
- Größenkriterium,
- Fremdlichtkriterium,
- Helligkeitskriterium,
- Kontrastkriterium,
- Verkippungskriterium, und
- Schärfekriterium, und
- wobei für zumindest zwei unterschiedliche Präsentationsfehler jeweils ein Fehlerkriterium vordefiniert ist,
- Bewirken, durch mindestens ein mit dem Fehlerauswertemodul (210) kommunikativ gekoppeltes Fehlerausgabemodul (212), eines Ausgebens einer Fehlermeldung durch die Ticketerfassungsvorrichtung (100, 200, 400, 500, 600), wenn ein Präsentationsfehler bestimmt wird,
und/oder
- Bewirken, mindestens ein mit der Auswerteeinrichtung (104, 204) kommunikativ gekoppeltes Lesebestätigungsmodul (214), eines Ausgebens einer Lesebestätigungsmeldung durch die Ticketerfassungsvorrichtung (100, 200, 400, 500, 600), wenn ein erfolgreiches Extrahieren des Dateninhalts des graphischen Ticketcodes aus den erfassten Bilddaten erfolgt ist.

11. Zugangskontrollsystem (560, 660) für ein Personentransportsystem oder ein Parksystem, umfassend:
- mindestens eine mit mindestens einem Gate (562, 564, 662) kommunikativ gekoppelte Ticketerfassungsvorrichtung (100, 200, 400, 500, 600) nach einem der vorherigen Ansprüche 1 bis 9,
- wobei das Zugangskontrollsystem (560, 660) mindestens eine mit einer Auswerteeinrichtung kommunikativ gekoppelte Freigabeeinrichtung (228) umfasst, eingerichtet zum Erzeugen eines Freigabesignals, basierend auf einem ausgewerteten Dateninhalt eines extrahierten graphischen Ticketcodes, und
- das Gate (562, 564, 662) eingerichtet ist zum Ermöglichen eines Passierens durch das Gate (562, 564, 662), basierend auf einem erhaltenen Freigabesignal.

## Claims

1. Fixed ticket detection device (100, 200, 400, 500, 600) for an access control system (560, 660), comprising:
- at least one camera-based detection device (102, 202, 402, 502, 602) configured to detect images of a graphic ticket code of a ticket medium (452, 552) in a detection area (108, 208, 408) of the camera-based detection device (102, 202, 402, 502, 602) and to create detected image data from the detected images, and
- at least one evaluation device (104, 204) communicatively coupled to the camera-based detection device (102, 202, 402, 502, 602), configured at least to receive the detected image data from the camera-based detection device (102, 202, 402, 502, 602) and for extracting a data content of the graphic ticket code from the received detected image data,
wherein the ticket detection device (100, 200, 400, 500, 600) comprises:
- at least one optical display device (106, 206, 406, 506, 606) communicatively coupled with the camera-based detection device (102, 202, 402, 502, 602) and configured to receive the detected image data from the camera-based detection device (102, 202, 402, 502, 602) and to display the image data of the ticket currently detected by the camera-based detection device (102, 202, 402, 502, 602) as images,
- at least one error evaluation module (210) communicatively coupled to the camera-based detection device (102, 202, 402, 502, 602), configured to determine a presentation error based on the detected image data of the ticket medium (452, 552) and at least one error criterion,
- wherein the at least one error criterion is selected from the group consisting of:
- ticket code completeness criterion,
- size criterion,
- extraneous light criterion,
- brightness criterion,
- contrast criterion,
- tilt criterion, and
- sharpness criterion,
- wherein for at least two different presentation errors a respective error criterion, is predefined and
- at least one error output module (212) communicatively coupled to the error evaluation module (210), configured at least to cause an error message to be output by the ticket detection device (100, 200, 400, 500, 600) if a presentation error is determined,
and/or
- at least one read confirmation module (214) communicatively coupled to the evaluation device (104, 204), configured at least to cause the ticket detection device (100, 200, 400, 500, 600) a read confirmation message if the data content of the graphic ticket code has been successfully extracted from the detected image data.

2. Ticket detection device (100, 200, 400, 500, 600) according to claim 1, **characterized in that**
- the ticket detection device (100, 200, 400, 500, 600) is configured to output an optical signal, an acoustic signal, and/or a haptic signal based on an error message received and/or a read confirmation message received.

3. Ticket detection device (100, 200, 400, 500, 600) according to claim 1 or 2, **characterized in that**
- the optical display device (106, 206, 406, 506, 606) is configured to imitate a specific presentation error based on an error message received, wherein the screen content of the display device imitates at least one property that corresponds to a property of the currently detected image of the ticket medium,
- wherein imitating a specific presentation error comprises, in particular, changing the brightness of the optical display device (106, 206, 406, 506, 606) based on a brightness error determined to be a presentation error.

4. Ticket detection device (100, 200, 400, 500, 600) according to one of claims 1 to 3, **characterized in that**
- the ticket detection device (100, 200, 400, 500, 600) comprises at least one instruction module (216) communicatively coupled to the error evaluation module (210), configured to determine at least one outputable user instruction for error correction based at least on the determined presentation error and a plurality of user instructions stored for the at least one presentation error, and
- the instruction module (216) is configured to cause the determined user instruction to be output.

5. Ticket recording device (100, 200, 400, 500, 600) according to one of claims 1 to 4, **characterized in that**
- the ticket recording device (100, 200, 400, 500, 600) comprises at least one near-field communication interface (224) communicatively coupled to the error output module (212), configured to send an error message to the ticket medium (452, 552) in the form of a mobile terminal (452, 552),
- wherein the error message contains first instructions which, when executed by a processor of the mobile terminal (452, 552), cause the mobile terminal (452, 552) to output at least a first notification signal, in particular a first vibration signal.

6. Ticket detection device (100, 200, 400, 500, 600) according to one of claims 1 to 5, **characterized in that**
- the ticket detection device (100, 200, 400, 500, 600) comprises at least one near-field communication interface (224) communicatively coupled to the error output module (212), configured to transmit a read confirmation message to the ticket medium (452, 552) in the form of a mobile terminal (452, 552),
- wherein the read confirmation message contains second instructions which, when executed by a processor of the mobile terminal (452, 552), cause the mobile terminal (452, 552) to output at least one second notification signal, in particular a second vibration signal,

7. Ticket detection device (100, 200, 400, 500, 600) according to claims 5 and 6, **characterized in that** the first notification signal differs from the second notification signal.

8. Ticket detection device (100, 200, 400, 500, 600) according to any of claims 1 to 7, **characterized in that**
- the ticket detection device (100, 200, 400, 500, 600) comprises at least one ticket medium detection module (218) coupled to the camera-based detection device (102, 202, 402, 502, 602), which is coupled to the camera-based detection device (102, 202, 402, 602) and is configured to detect the presence of a ticket medium (452, 552) in the detection area (108, 208, 408) of the camera-based detection device (102, 202, 402, 502, 602),
- wherein the ticket medium detection module (218) is configured to cause the image data detected by the camera-based detection device (102, 202, 402, 502, 602) as images only upon detection of the presence of the ticket medium (452, 552) in the detection area (108, 208, 408) of the camera-based detection device (102, 202, 402, 502, 602).

9. Ticket detection device (100, 200, 400, 500, 600) according to one of the previous claims, **characterized in that**
- the ticket detection device (100, 200, 400, 500, 600) comprises at least one release equipment (228) configured to generate a release signal based on an evaluated data content of the graphical ticket code if the evaluation results in the user being authorized to pass through a gate.

10. Method for operating a fixed ticket detection device (100, 200, 400, 500, 600), comprising:
- detecting, by at least one camera-based detection device (102, 202, 402, 502, 602), of images of a graphic ticket code of a ticket medium (452, 552) in a detection area (108, 208, 408) of the camera-based detection device (102, 202, 402, 502, 602),
- creating, by the at least one camera-based detection device (102, 202, 402, 502, 602), of detected image data from the detected images and
- extracting, by at least one evaluation device (104, 204) communicatively coupled to the camera-based detection device (102, 202, 402, 502, 602), of the graphic ticket code of the detected image data,
wherein the method further comprises:
- displaying, by at least one optical display device (106, 206, 406, 506, 606) communicatively coupled to the camera-based detection device (102, 202, 402, 502, 602), of the image data currently detected by the camera-based detection device (102, 202, 402, 502, 602) as images,
- determining, by at least one error evaluation module (210) communicatively coupled to the camera-based detection device (102, 202, 402, 502, 602), of at least one presentation error based on the detected image data of the ticket medium (452, 552) and at least one error criterion,
- wherein the at least one error criterion is selected from the group consisting of:
- ticket code completeness criterion,
- size criterion,
- extraneous light criterion,
- brightness criterion,
- contrast criterion,
- tilt criterion, and
- sharpness criterion, and
- wherein for at least two different presentation errors a respective error criterion is predefined,
- causing, by means of at least one error output module (212) communicatively coupled to the error evaluation module (210), an error message to be output by the ticket detection device (100, 200, 400, 500, 600) if a presentation error is determined,
and/or
- causing at least one read confirmation module (214) communicatively coupled to the evaluation device (104, 204) to output a read confirmation message by the ticket detection device (100, 200, 400, 500, 600) if the data content of the graphic ticket code has been successfully extracted from the detected image data.

11. Access control system (560, 660) for a passenger transport system or a parking system, comprising:
- at least one ticket detection device (100, 200, 400, 500, 600) communicatively coupled to at least one gate (562, 564, 662) according to one of the previous claims 1 to 9,
- wherein the access control system (560, 660) comprises at least one release equipment (228) communicatively coupled to an evaluation device, configured to generate a release signal based on an evaluated data content of an extracted graphical ticket code, and
- the gate (562, 564, 662) is configured to allow passage through the gate (562, 564, 662) based on a received release signal.

## Revendications

1. Dispositif de détection de tickets monté de manière fixe (100, 200, 400, 500, 600) pour un système de contrôle d'accès (560, 660), comprenant :
- au moins un dispositif de détection à caméra (102, 202, 402, 502, 602) configuré pour détecter des images d'un code de ticket graphique d'un support de ticket (452, 552) dans une zone de détection (108, 208, 408) du dispositif de détection à caméra (102, 202, 402, 502, 602) et pour créer des données d'image saisies à partir des images détectées, et
- au moins un dispositif d'évaluation (104, 204) couplé de manière communicative avec le dispositif de détection à caméra (102, 202, 402, 502, 602), configuré au moins pour obtenir les données d'image saisies et pour extraire un contenu de données du code graphique de billet à partir des données d'image saisies obtenues,
où le dispositif de détection de billets (100, 200, 400, 500, 600) comprend :
- au moins un dispositif d'affichage optique (106, 206, 406, 506, 606) couplé de manière communicative au dispositif de détection à caméra (102, 202, 402, 502, 602) 506, 606), configuré pour recevoir les données d'image saisies provenant du dispositif de détection à caméra (102, 202, 402, 502, 602) et pour afficher les données d'image actuellement saisies par le dispositif de détection à caméra (102, 202, 402, 502, 602) en tant qu'images,
- au moins un module d'évaluation d'erreur (210) couplé de manière communicative avec le dispositif de détection à caméra (102, 202, 402, 502, 602), configuré pour déterminer une erreur de présentation basé sur les données d'image saisies du support de ticket (452, 552) et d'au moins un critère d'erreur,
- où l'au moins un critère d'erreur est sélectionné parmi le groupe constitué de :
- critère d'intégralité de code de ticket,
- critère de taille,
- critère de lumière parasite,
- critère de luminosité,
- critère de contraste,
- critère d'inclinaison, et
- critère de netteté,
- où pour au moins deux erreurs de présentation différentes un critère d'erreur respectif est prédéfini, et
- au moins un module d'émission d'erreur (212) couplé de manière communicative avec le module d'évaluation d'erreur (210), configuré au moins pour effectuer une émission d'un message d'erreur par le dispositif de détection de ticket (100, 200, 400, 500, 600) lorsqu'une erreur de présentation est déterminée, et/ou
- au moins un module de confirmation de lecture (214) couplé de manière communicative au dispositif d'évaluation (104, 204), configuré au moins pour effectuer une émission d'un message de confirmation de lecture par le dispositif de détection de ticket (100, 200, 400, 500, 600) lorsqu'une extraction réussie du contenu des données du code graphique de ticket a été effectuée à partir des données d'image saisies.

2. Dispositif de détection de tickets (100, 200, 400, 500, 600) selon la revendication 1, **caractérisé en ce que**
- le dispositif de détection de ticket (100, 200, 400, 500, 600) est configuré pour émettre un signal optique, un signal acoustique et/ou un signal tactile sur la base d'un message d'erreur reçu et/ou d'un message de confirmation de lecture reçu.

3. Dispositif de détection de tickets (100, 200, 400, 500, 600) selon la revendication 1 ou 2, **caractérisé en ce que**
- le dispositif d'affichage optique (106, 206, 406, 506, 606) est configuré pour imiter une erreur de présentation spécifique sur la base d'un message d'erreur reçu, où le contenu de l'écran du dispositif d'affichage imite au moins une propriété qui correspond à une propriété de l'image actuellement saisie du support de ticket,
- où l'imitation d'une erreur de présentation spécifique comprenant en particulier une modification de la luminosité du dispositif d'affichage optique (106, 206, 406, 506, 606) sur la base d'une erreur de luminosité déterminée comme erreur de présentation.

4. Dispositif de détection de tickets (100, 200, 400, 500, 600) selon l'une des revendications 1 à 3, **caractérisé en ce que**
- le dispositif de détection de tickets (100, 200, 400, 500, 600) comprend au moins un module d'instruction (216) couplé de manière communicative au module d'évaluation d'erreur (210), configuré pour déterminer au moins une instruction utilisateur émissible pour éliminer l'erreur, basé sur au moins l'erreur de présentation déterminée et d'une pluralité d'instructions utilisateur enregistrées pour l'au moins une erreur de présentation, et
- le module d'instruction (216) est configuré pour provoquer une émission de l'instruction utilisateur déterminée.

5. Dispositif de détection de tickets (100, 200, 400, 500, 600) selon l'une des revendications 1 à 4, **caractérisé en ce que**
- le dispositif de détection de tickets (100, 200, 400, 500, 600) comprend au moins une interface de communication en champ proche (224) couplée de manière communicative au module d'émission d'erreur (212), configuré pour émettre un message d'erreur au support de ticket (452, 552) sous la forme d'un terminal mobile (452, 552),
- où le message d'erreur contient des premières instructions qui, lorsqu'elles sont exécutées par un processeur du terminal mobile (452, 552), amènent le terminal mobile (452, 552) à émettre au moins un premier signal d'avertissement, en particulier un premier signal de vibration.

6. Dispositif de détection de tickets (100, 200, 400, 500, 600) selon l'une des revendications 1 à 5, **caractérisé en ce que**
- le dispositif de détection de tickets (100, 200, 400, 500, 600) comprend au moins une interface de communication en champ proche (224) couplée de manière communicative au module d'émission d'erreur (212), configuré pour envoyer un message de confirmation de lecture au support de ticket (452, 552) sous la forme d'un terminal mobile (452, 552),
- où le message de confirmation de lecture contient des deuxièmes instructions qui, lorsqu'elles sont exécutées par un processeur du terminal mobile (452, 552), amènent le terminal mobile (452, 552) à émettre au moins un deuxième signal d'avertissement, en particulier un deuxième signal de vibration.

7. Dispositif de détection de tickets (100, 200, 400, 500, 600) selon les revendications 5 et 6, **caractérisé en ce que** le premier signal d'avertissement diffère du deuxième signal d'avertissement.

8. Dispositif de détection de tickets (100, 200, 400, 500, 600) selon l'une des revendications 1 à 7, **caractérisé en ce que**
- le dispositif de détection de tickets (100, 200, 400, 500, 600) comprend au moins un module de détection de support de ticket (218) couplé au dispositif de détection à caméra (102, 202, 402, 502, 602), configuré pour détecter une présence d'un support de ticket (452, 552) dans la zone de détection (108, 208, 408) du dispositif de détection à caméra (102, 202, 402, 502, 602),
- où le module de détection de support de ticket (218) est configuré pour effectuer un affichage des données d'image saisies par le dispositif de détection à caméra (102, 202, 402, 502, 602) en tant qu'images uniquement en cas de détection de la présence du support de ticket (452, 552) dans la zone de détection (108, 208, 408) du dispositif de détection à caméra (102, 202, 402, 502, 602).

9. Dispositif de détection de tickets (100, 200, 400, 500, 600) selon l'une des revendications précédentes, **caractérisé en ce que**
- le dispositif de détection de tickets (100, 200, 400, 500, 600) comprend au moins un dispositif de libération (228) configuré pour générer un signal de libération basé sur un contenu de données évalué du code graphique de ticket lorsque l'évaluation révèle que l'utilisateur est autorisé à franchir un portillon.

10. Méthode pour mettre en œuvre un dispositif de détection de tickets monté de manière fixe (100, 200, 400, 500, 600), comprenant:
- détecter, par au moins un dispositif de détection à caméra (102, 202, 402, 502, 602), des images d'un code de billet graphique d'un support de billet (452, 552) dans une zone de détection (108, 208, 408) du dispositif de détection à caméra (102, 202, 402, 502, 602),
- créer, par l'au moins un dispositif de détection à caméra (102, 202, 402, 502, 602), des données d'images saisis à partir d'images saisis et
- extraire, par au moins un dispositif d'évaluation (104, 204) couplé de manière communicative au dispositif de détection à caméra (102, 202, 402, 502, 602), un code graphique de ticket à partir des données d'image saisies,
où la méthode comprend en outre :
- afficher, par au moins un dispositif d'affichage optique (106, 206, 406, 506, 606) couplé de manière communicative au dispositif de détection à caméra (102, 202, 402, 502, 602) des données d'image actuellement saisies sous forme d'images,
- déterminer, par au moins un module d'évaluation d'erreur (210) couplé de manière communicative au dispositif de détection à caméra (102, 202, 402, 502, 602), une erreur de présentation, basé sur des données d'image saisies du support de ticket (452, 552) et d'au moins un critère d'erreur,
- où le au moins un critère d'erreur est sélectionné parmi le groupe constitué de :
- critère d'intégralité du code du ticket,
- critère de taille,
- critère de lumière parasite,
- critère de luminosité,
- critère de contraste,
- critère d'inclinaison et
- critère de netteté, et
- où pour au moins deux erreurs de présentation différentes un critère d'erreur respectif est prédéfini,
- effectuer, par au moins un module d'émission d'erreur (212) couplé de manière communicative avec le module d'évaluation d'erreur (210), une émission d'un message d'erreur par le dispositif de détection de ticket (100, 200, 400, 500, 600) lorsqu'une erreur de présentation est déterminée,
et/ou
- effectuer, au moyen d'au moins un module de confirmation de lecture (214) couplé de manière communicative au dispositif d'évaluation (104, 204), une émission d'un message de confirmation de lecture par le dispositif de détection de ticket (100, 200, 400, 500, 600) lorsqu'une extraction réussie du contenu des données du code de ticket graphique a été effectuée à partir des données d'image saisies.

11. Système de contrôle d'accès (560, 660) pour un système de transport de personnes ou un système de stationnement, comprenant:
- au moins un dispositif de détection de ticket (100, 200, 400, 500, 600) couplé de manière communicative à au moins une portail (562, 564, 662) selon l'une des revendications précédentes 1 à 9,
- où le système de contrôle d'accès (560, 660) comprend au moins un dispositif de libération (228) couplé de manière communicative à un dispositif d'évaluation, configuré pour générer un signal de libération sur la base d'un contenu de données évalué d'un code de ticket graphique extrait, et
- le portail (562, 564, 662) est configuré pour permettre un passage à travers le portail (562, 564, 662) sur la base d'un signal de libération reçu.
